# EUROPEAN PATENT SPECIFICATION

(11) **EP 4 333 389 B1**
(45) Date of publication and mention of the grant of the patent: **23.09.2026**
(21) Application number: 22795263.7
(22) Date of filing: 25.02.2022
(51) Int. Cl.: H04L 1/08, H04L 27/26, H04W 28/04

(54) **COMMUNICATION DEVICE AND COMMUNICATION METHOD**
KOMMUNIKATIONSVORRICHTUNG UND KOMMUNIKATIONSVERFAHREN
DISPOSITIF DE COMMUNICATION ET PROCÉDÉ DE COMMUNICATION

(30) Priority: 28.04.2021 JP 2021076545
(43) Date of publication of application: 06.03.2024
(73) Proprietor: Sony Group Corporation, Tokyo 108-0075 (JP)
(72) Inventor: MATSUDA, Hiroki, Tokyo 108-0075 (JP); TSUDA, Shinichiro, Tokyo 108-0075 (JP)
(74) Representative: Witte, Weller & Partner Patentanwälte mbB
(86) International application number: PCT/JP2022/007953
(87) International publication number: WO 2022/230340

(56) References cited:
- WO-A1-2021/035573
- JP-A- 2018 534 839
- JP-A- 2020 528 234
- US-A1- 2010 054 235
- US-A1- 2018 184 447
- ERICSSON: "NB-IoT - Design Considerations for Single Tone Frequency Hopped NB-PRACH", 3GPP DRAFT; R1-160093 - NB-IOT - DESIGN CONSIDERATIONS FOR SINGE TONE FREQUENCY HOPPED NB-PRACH, vol. RAN WG1, 17 January 2016 (2016-01-17), Budapest, HU, pages 1 - 7, XP051053413

## Description

### Field

The present disclosure relates to a communication apparatus and a communication method.

### Background

In recent years, with increasing demands for wide area coverage, connection stability, and the like, studies on a non-terrestrial network (NTN) in which a wireless network is provided from a device floating in the air or space have been started. In the non-terrestrial network, the wireless network is provided to a terminal device via a satellite station or an aircraft. In addition, in the non-terrestrial network, integrated operation between a terrestrial network and the non-terrestrial network is facilitated by using a same radio access system as that of the terrestrial network.

Compared with the terrestrial network, the non-terrestrial network has a very long propagation distance between the base station and the satellite and between the satellite and the terminal, and thus has a problem that reception power becomes very small and error rate characteristics deteriorate. In order to compensate for decreased reception power due to long-distance transmission, Non Patent Literature 1 discloses improvement in the reception power by repetitive transmission.

### Citation List

### Non Patent Literature

Non Patent Literature 1: R1-2100877, Sony, "HARQ issues for IoT-NTN," 3GPP TSG RAN WG1#104e, E-meeting, 25 January - 5 February 2021, [Online], [Searched on April 23, 2021], Internet <URL:https://www.3gpp.org/ftp/tsg_ran/WG1_RL1/TSGR1_104-e/Docs/R1-2100877.zip>
US 2010/054235 A1 discloses a method for dividing a preamble sequence repeated two times into two parts and rearranging the same so as to reduce the influence of a frequency offset. Each of the repetition parts (i.e., a first preamble 1 and a second preamble 2) of an original preamble sequence repeated two times is divided into a first part and a second part. Each of the divided part can be ordered according to different orders.
WO 2021/035573 A1 discloses to concatenate repeated transport blocks (TBs) into a TB group (TBG), to insert a MAC header into each TB and symbols on downlink (DL) may be cyclic prefix (CP) OFDM (CP-OFDM) symbols.

### Summary

### Technical Problem

In a case where the above-described repetitive transmission is performed, there is a problem that frequency utilization efficiency is lowered by the repetitive transmission of same data. Therefore, a technique for further suppressing a decrease in frequency utilization efficiency is required.

Therefore, the present disclosure proposes a mechanism capable of further suppressing the decrease in the frequency utilization efficiency.

Note that the above problem or object is merely one of a plurality of problems or objects that can be solved or achieved by a plurality of embodiments disclosed in the present specification.

### Solution to Problem

According to the present disclosure, a communication apparatus and a communication method are provided as defined in the claims.

### Brief Description of Drawings

FIG. 1A is a diagram illustrating an example of repetitive transmission.
FIG. 1B is a diagram illustrating an example of repetitive transmission according to an embodiment of the present disclosure.
FIG. 2 is a diagram illustrating a configuration example of a communication system according to an embodiment of the present disclosure.
FIG. 3 is a diagram illustrating an example of a wireless network provided by a communication system.
FIG. 4 is a diagram illustrating an outline of satellite communication provided by the communication system.
FIG. 5 is a diagram illustrating an example of a cell configured by a non-geostationary satellite.
FIG. 6 is a diagram illustrating a configuration example of a management device according to the embodiment of the present disclosure.
FIG. 7 is a diagram illustrating a configuration example of a ground station according to the embodiment of the present disclosure.
FIG. 8 is a diagram illustrating a configuration example of a satellite station according to the embodiment of the present disclosure.
FIG. 9 is a diagram illustrating a configuration example of a terminal device according to the embodiment of the present disclosure.
FIG. 10 is a diagram illustrating an example of a frame configuration of a transmission signal according to the embodiment of the present disclosure.
FIG. 11 is a diagram illustrating an example of a transmission process according to the embodiment of the present disclosure.
FIG. 12 is a diagram illustrating an FFT segment of a reception process according to the embodiment of the present disclosure.
FIG. 13 is a sequence diagram illustrating an operation of repetitive transmission of the communication system according to the embodiment of the present disclosure.
FIG. 14 is a diagram illustrating an example of a frame configuration according to a first modification of the embodiment of the present disclosure.
FIG. 15 is a diagram illustrating an example of a frame configuration according to a second modification of the embodiment of the present disclosure.
FIG. 16 is a diagram illustrating an FFT segment according to the second modification of the embodiment of the present disclosure.
FIG. 17 is a diagram illustrating frequency hopping according to a third modification of the embodiment of the present disclosure.

### Description of Embodiments

Hereinafter, an embodiment of the present disclosure will be described in detail with reference to the accompanying drawings. Note that, in the present specification and the drawings, components having substantially the same functional configuration are denoted by the same reference signs to omit redundant description.

In addition, in the present specification and the drawings, a plurality of components having substantially the same functional configurations may be distinguished by attaching a different number or alphabet after the same reference sign. For example, a plurality of configurations having substantially the same functional configuration is distinguished as terminal devices 40₁, 40₂, and 40₃ as necessary. However, when it is not particularly necessary to distinguish each of the plurality of components having substantially the same functional configuration, only the same reference sign is given. For example, in a case where it is not necessary to particularly distinguish the terminal devices 40₁, 40₂, and 40₃, they are simply referred to as terminal devices 40.

Furthermore, in the present specification and the drawings, specific values may be indicated and described, but the values are merely examples, and other values may be applied.

Furthermore, resources in the present specification and the drawings represent Frequency, Time, Resource Element (including REG, CCE, and CORESET), Resource Block, Bandwidth Part, Component Carrier, Symbol, Sub-Symbol, Slot, Mini-Slot, Subslot, Subframe, Frame, PRACH occasion, Occasion, Code, Multi-access physical resource, Multi-access signature, Subcarrier Spacing (Numerology), and the like.

In the description below, one or more embodiments (including examples and modifications) can be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

### <<1. Outline>>

### <1.1. Problem>

Radio access systems and wireless networks for cellular mobile communication (hereinafter also referred to as Long Term Evolution (LTE), LTE-Advanced (LTE-A), LTE-Advanced Pro (LTE-A Pro), New Radio (NR), New Radio Access Technology (NRAT), Evolved Universal Terrestrial Radio Access (EUTRA), or Further EUTRA (FEUTRA)) are under review in the 3rd Generation Partnership Project (3GPP). Note that, in the following description, the LTE includes LTE-A, LTE-A Pro, and EUTRA, and the NR includes NRAT and FEUTRA. In the LTE, a base station device (base station and communication apparatus) is also referred to as an evolved NodeB (eNodeB), in the NR, a base station device (base station and communication apparatus) is also referred to as a gNodeB, and in the LTE and NR, a terminal device (mobile station, mobile station device, terminal, and communication apparatus) is also referred to as user equipment (UE). The LTE and NR are cellular communication systems in which a plurality of cell-like areas covered by the base station device is arranged. A single base station device may manage a plurality of cells.

The NR is a radio access technology (RAT) different from the LTE as a next-generation radio access system for the LTE. The NR is an access technology that can support various use cases including enhanced mobile broadband (eMBB), massive machine type communications (mMTC), and ultra-reliable and low latency communications (URLLC). The NR is studied aiming at a technical framework corresponding to usage scenarios, requirement conditions, arrangement scenarios, and the like in the use cases.

Furthermore, in the NR, studies on non-terrestrial networks have started due to an increasing demand for wide area coverage, connection stability, and the like. In the non-terrestrial network, a wireless network is scheduled to be provided to the terminal device via the base station other than a ground station such as a satellite station or an aircraft station. The base station other than the ground station is referred to as a non-ground station or a non-ground base station. A wireless network provided by the ground station is referred to as a terrestrial network (TN). By using the same radio access system for the terrestrial network and the non-terrestrial network, integrated operation of the terrestrial network and the non-terrestrial network becomes possible.

Compared with the terrestrial network, the non-terrestrial network has a very long propagation distance between the base station and the satellite and between the satellite and the terminal, and thus has a problem that reception power becomes very small and error rate characteristics deteriorate.

As described above, when communication (e.g., satellite communication, LPWA, or the like) is performed in a long radio wave propagation distance between a transmitter and a receiver, a radio wave reception strength becomes a problem. Therefore, in order to improve the radio wave reception strength, it is very effective to repeatedly transmit the same data to obtain a gain.

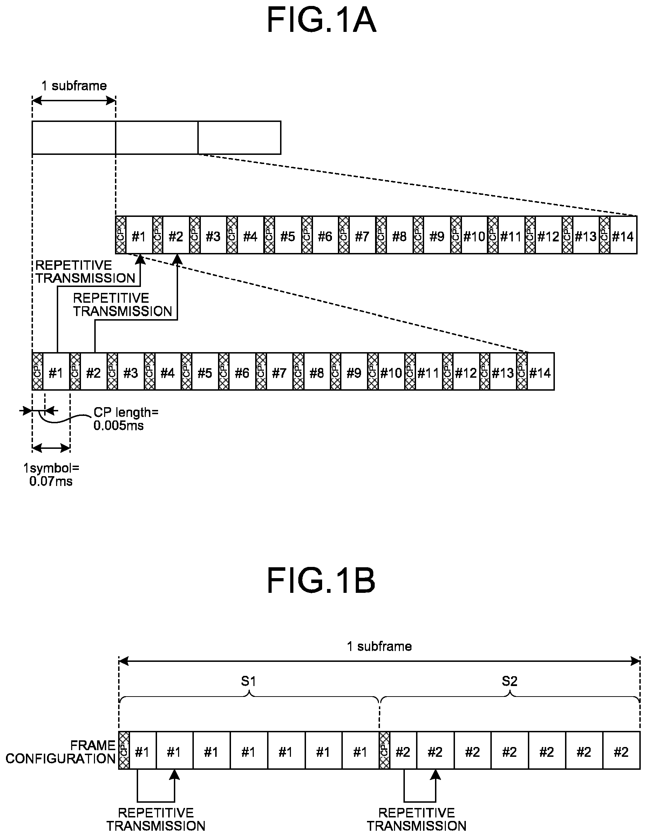

FIG. 1A is a diagram illustrating an example of repetitive transmission. In the repetitive transmission illustrated in FIG. 1A, one subframe includes 14 symbols. Here, the repetitive transmission is performed by repeatedly transmitting subframes including data #1 to #14.

As described above, since the transmission side repeatedly transmits the same data #1 to #14, the reception side can improve the radio wave reception strength.

In the example in FIG. 1A, one symbol is 0.07 ms, and a cyclic prefix (CP) having a length of 0.005 ms is added to the head of each symbol.

For example, in a case where coverage extension is performed in communication for Internet of Things (IoT), 2048 times of repetitive transmission may be performed. As described above, when the repetitive transmission is performed, the same data is transmitted by a plurality of resources, and thus, a decrease in a frequency utilization efficiency becomes a problem.

### <1.2. Overview of solution>

Therefore, in the present embodiment, a decrease in the frequency utilization efficiency is suppressed by the following means.

For example, a communication system of the present embodiment includes a communication apparatus. The communication apparatus repeatedly performs transmission for a first number of times (number of times of repetitive transmission). Signals transmitted by the communication apparatus will be described with reference to FIG. 1B. FIG. 1B is a diagram illustrating an example of repetitive transmission according to the embodiment of the present disclosure.

As illustrated in FIG. 1B, the communication apparatus generates a signal S1 (example of a second signal) obtained by concatenating data #1 (example of a first signal) repeated seven times (number of times of concatenation, example of a second number of times). In addition, the communication apparatus generates a signal S2 (example of a second signal) obtained by concatenating data #2 (example of the first signal) repeated seven times (number of times of concatenation, example of the second number of times). A head of the signals S1 and S2 is a cyclic prefix CP. The communication apparatus generates a subframe signal (example of a transmission signal) including the signals S1 and S2 each having the cyclic prefix CP at the head, and transmits the subframe signal to a communication partner.

In this manner, by concatenating repeated data to generate a signal and setting the head of the generated signal as the cyclic prefix CP, the communication apparatus can reduce the number of cyclic prefixes CP provided in the transmission signal. As a result, the communication system can further suppress a decrease in the frequency utilization efficiency.

In FIG. 1B, the heads of the signals S1 and S2 is the cyclic prefix CP, but the present disclosure is not limited thereto. For example, ends of the signals S1 and S2 may be the cyclic prefix CP.

The outline of the present embodiment has been described above, and the communication system according to the present embodiment will be described in detail below. Note that a case where the communication system is a non-terrestrial network will be described below, but the communication system to which the technology according to the present embodiment can be applied is not limited to the non-terrestrial network. The technology according to the present embodiment can also be applied to networks other than the non-terrestrial network as long as the communication system performs the repetitive transmission.

### <<2. Configuration of communication system>>

First, a configuration of a communication system 1 of the present embodiment will be described.

The communication system 1 is a cellular communication system using a radio access technology such as the LTE or NR. In cellular mobile communication, the base station device (e.g., eNodeB (eNB), gNodeB (gNB), and RAN node (including EUTRAN and NGRAN)) or a relay device installed on a ground configures a cell (macro cell, micro cell, femto cell, or small cell) to configure a wireless network. Hereinafter, the base station device or the relay device installed on the ground is also referred to as a ground station device (or ground station). The wireless network provided by the ground station device is referred to as a terrestrial network.

On the other hand, in view of a demand for cost reduction of the base station device and a coverage to an area where radio waves are difficult to reach from the base station device, provision of the wireless network from other than the ground station device has been studied. Examples of a device other than the ground station device include a satellite station (satellite base station device, satellite relay station device, and space station) that orbits the earth, and a device that floats in the air such as an aerial vehicle and a drone. Hereinafter, these devices other than the ground station device are also referred to as a non-ground station device (or non-ground station). A wireless network provided by these devices other than the ground station is referred to as a non-terrestrial network (NTN).

When the non-ground station is the satellite station, the communication system 1 may be a bent-pipe (transparent) type mobile satellite communication system. Note that the radio access system used by the communication system 1 is not limited to the LTE and NR, and may be other radio access systems such as wideband code division multiple access (W-CDMA) or code division multiple access 2000 (cdma2000).

In the present embodiment, the ground station refers to the base station installed on the ground (including relay station). Here, the "ground" is a ground in a broad sense including not only land but also underground, on water, and underwater. Note that, in the following description, the "ground station" may be replaced with a "gateway".

Furthermore, the technology of the present disclosure is applicable not only to communication between the non-ground base station and the terminal device but also to communication between the ground base station and the terminal device.

Hereinafter, a configuration of the communication system 1 will be specifically described.

### <2.1. Overall configuration of communication system>

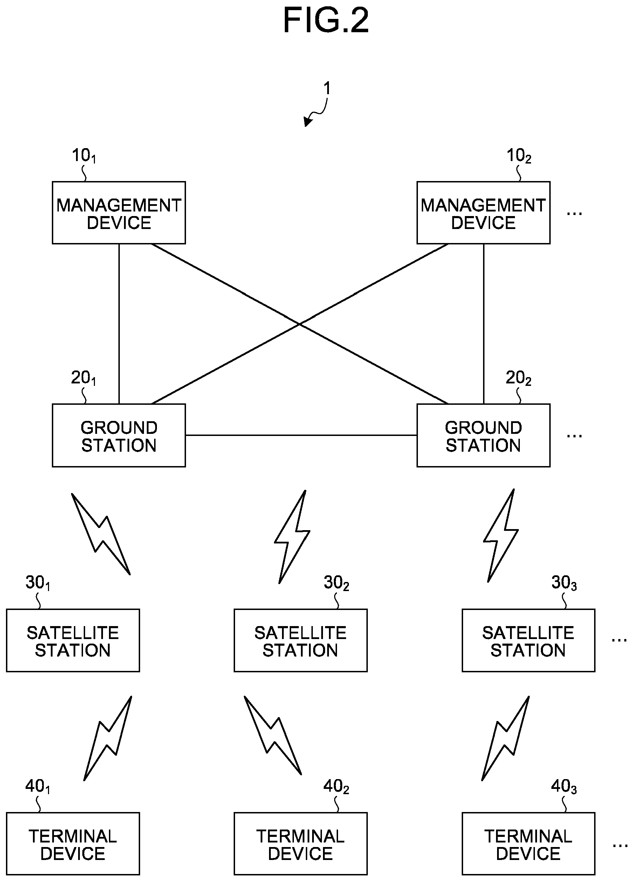

FIG. 2 is a diagram illustrating a configuration example of the communication system 1 according to the embodiment of the present disclosure. The communication system 1 includes a management device 10, a ground station 20, a satellite station 30, and a terminal device 40. The communication system 1 provides a user with a wireless network capable of mobile communication by coordinated operation of wireless communication apparatuses configuring the communication system 1. The wireless network of the present embodiment includes, for example, a radio access network and a core network. Note that, in the present embodiment, the wireless communication apparatus is an apparatus having a function of wireless communication, and corresponds to the ground station 20, the satellite station 30, and the terminal device 40 in the example in FIG. 2.

The communication system 1 may include a plurality of management devices 10, a plurality of ground stations 20, a plurality of satellite stations 30, and a plurality of terminal devices 40. In the example in FIG. 2, the communication system 1 includes management devices 10₁, 10₂, and the like as the management device 10, ground stations 20₁, 20₂, and the like as the ground station 20. Further, the communication system 1 includes satellite stations 30₁, 30₂, and the like as the satellite station 30, and terminal devices 40₁, 40₂, and 40₃, and the like as the terminal device 40.

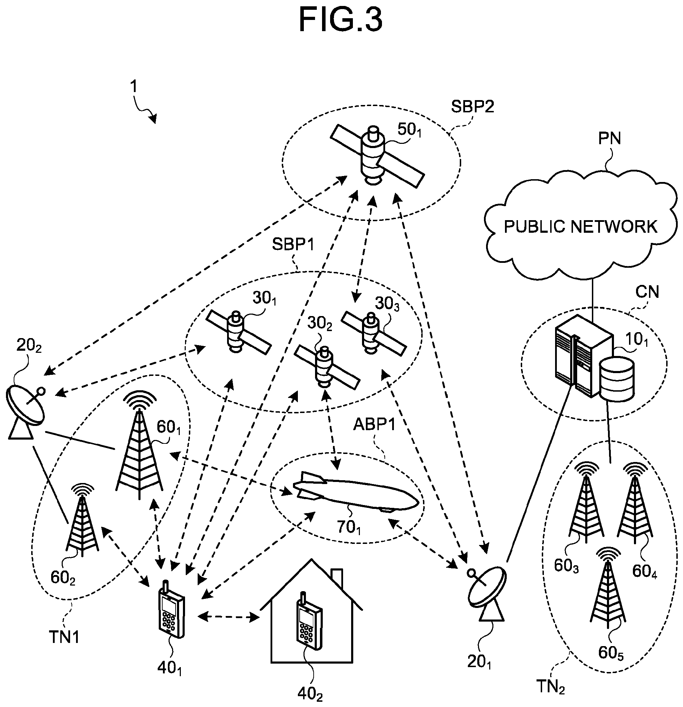

FIG. 3 is a diagram illustrating an example of the wireless network provided by the communication system 1. The ground station 20 (satellite station 30) and a base station 60 configure a cell. The cell is an area covered by the wireless communication. The cell may be any of a macro cell, a micro cell, a femto cell, or a small cell. Note that the communication system 1 may be configured to manage a plurality of cells by a single base station (satellite station), or may be configured to manage one cell by a plurality of base stations.

In the example in FIG. 3, the base stations 60₁ and 60₂ configure a terrestrial network TN1, and the base stations 60₃, 60₄, and 60₅ configure a terrestrial network TN2. The terrestrial network TN1 and the terrestrial network TN2 are, for example, networks operated by a wireless communication carrier such as a telephone company. The terrestrial network TN1 and the terrestrial network TN2 may be operated by different wireless communication carriers, or may be operated by the same wireless communication carrier. The terrestrial network TN1 and the terrestrial network TN2 may also be regarded as one terrestrial network.

Each of the terrestrial network TN1 and the terrestrial network TN2 is connected to the core network. In the example in FIG. 3, the base station 60 configuring the terrestrial network TN2 is connected to, for example, a core network CN configured by the management device 10₁. When the radio access system of the terrestrial network TN2 is the LTE, the core network CN is EPC. When the radio access system of the terrestrial network TN2 is the NR, the core network CN is 5GC. Naturally, the core network CN is not limited to the EPC or the 5GC, and may be a core network of another radio access system. In the example in FIG. 3, the terrestrial network TN1 is not connected to the core network, but the terrestrial network TN1 may be connected to the core network CN. Furthermore, the terrestrial network TN1 may be connected to a core network (not illustrated) different from the core network CN.

The core network CN includes a gateway device and a gate exchange, and is connected to a public network PN via the gateway device. The public network PN is, for example, a public data network such as the Internet, a regional IP network, or a telephone network (mobile telephone network, fixed telephone network, etc.). The gateway device is, for example, a server device connected to the Internet or the regional IP network. The gateway exchange is, for example, an exchange connected to a telephone network of a telephone company. The management device 10₁ may have a function as the gateway device or the gate exchange.

Each of the satellite stations 30 and 50 and an aircraft station 70 illustrated in FIG. 3 is the non-ground station such as the satellite station or the aircraft station. A satellite station group (or satellite station) configuring the non-terrestrial network is referred to as a spaceborne platform. In addition, an aircraft station group (or aircraft station) configuring the non-terrestrial network is referred to as an airborne platform. In the example in FIG. 3, the satellite stations 30₁, 30₂, and 30₃ configure a spaceborne platform SBP1, and the satellite station 50₁ configures a spaceborne platform SBP2. In addition, the aircraft station 70₃ configures an airborne platform ABP1.

The terminal device 40 can communicate with both the ground station and the non-ground station. In the example in FIG. 3, the terminal device 40₁ can communicate with the ground station configuring the terrestrial network TN1. In addition, the terminal device 40₁ can communicate with the non-ground stations configuring the spaceborne platforms SBP1 and SBP2. Further, the terminal device 40₁ can also communicate with the non-ground station configuring the airborne platform ABP1. Note that the terminal device 40₁ may be able to directly communicate with another terminal device 40 (terminal device 40₂ of the example in FIG. 3).

The non-ground station such as the satellite station 30 may be connectable to the terrestrial network or the core network via the relay station. The non-ground stations can directly communicate with each other without interposing the relay station.

The relay station is, for example, an aircraft station or an earth station. The aircraft station is a radio station installed on the ground or a mobile body traveling on the ground in order to communicate with the aircraft station. Furthermore, the earth station is a radio station located on the earth (including air) in order to communicate with the satellite station (space station). The earth station may be a large earth station or a small earth station such as a very small aperture terminal (VSAT). Note that the earth station may be a VSAT controlled earth station (also referred to as a master station or a HUB station) or a VSAT earth station (also referred to as a slave station). Furthermore, the earth station may be a radio station installed in the mobile body moving on the ground. For example, as the earth station mounted on ship, there is an earth station on board vessels (ESV). Furthermore, the earth station may include an aircraft earth station that is installed in an aircraft (including a helicopter) and communicates with the satellite station. Furthermore, the earth station may include an aircraft earth station that is installed in the mobile body moving on the ground and communicates with the aircraft earth station via the satellite station. Note that the relay station may be a portable movable radio station that communicates with the satellite station or the aircraft station. The relay station can be regarded as a part of the communication system 1.

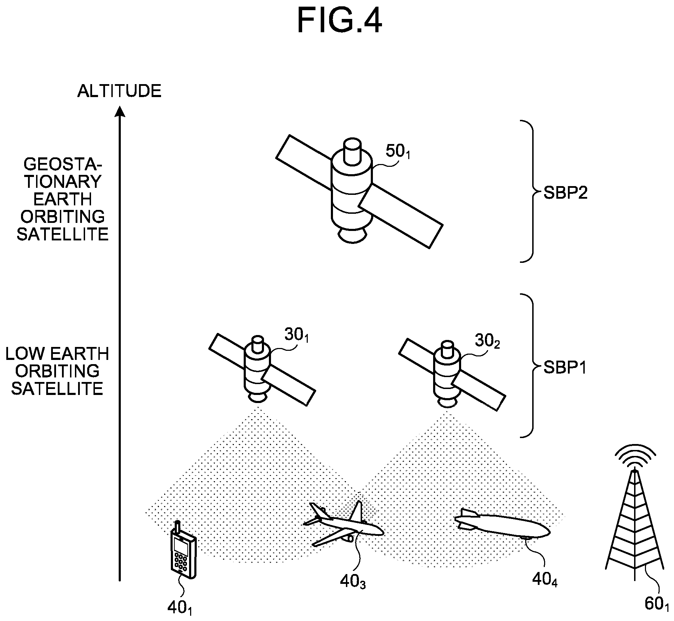

Each device configuring the spaceborne platforms SBP1 and SBP2 performs satellite communication with the terminal device 40. The satellite communication is wireless communication between the satellite station and the communication apparatus. FIG. 4 is a diagram illustrating an outline of the satellite communication provided by the communication system 1. The satellite station is mainly divided into a geostationary earth orbiting satellite station and a low earth orbiting satellite station.

The geostationary earth orbiting satellite station is located at an altitude of approximately 35786 km and orbits the earth at the same speed as a rotation speed of the earth. In the example in FIG. 4, the satellite station 50₁ configuring the spaceborne platform SBP2 is the geostationary earth orbiting satellite station. The geostationary earth orbiting satellite station has almost zero relative velocity with the terminal device 40 on the ground, and is observed as if he geostationary satellite is still from the terminal device 40 on the ground. The satellite station 50₁ performs the satellite communication with the terminal devices 40₁, 40₃, 40₄, and the like located on the earth.

The low earth orbiting satellite station is a satellite station that orbits at a lower altitude than the geostationary earth orbiting satellite station or a medium earth orbiting satellite station. The low earth orbiting satellite station is, for example, a satellite station located at an altitude from 500 km to 2000 km. In the example in FIG. 4, the satellite stations 30₂ and 30₃ configuring the spaceborne platform SBP1 are low earth orbiting satellite stations. Note that FIG. 4 illustrates only two satellite stations, namely, the satellite station 30₂ and the satellite station 30₃, as the satellite stations configuring the spaceborne platform SBP1. However, the spaceborne platform SBP1 is actually configured with two or more (e.g., several tens to several thousands) of satellite stations 30 forming a low earth orbiting satellite constellation. Unlike the geostationary earth orbiting satellite station, the low earth orbiting satellite station has a relative velocity with the terminal device 40 on the ground, and is observed as if the low-orbit satellite station is moving from the terminal device 40 on the ground. The satellite stations 30₂ and 30₃ configure respective cells, and perform the satellite communication with terminal devices 40₁, 40₃, 40₄, and the like located on the earth.

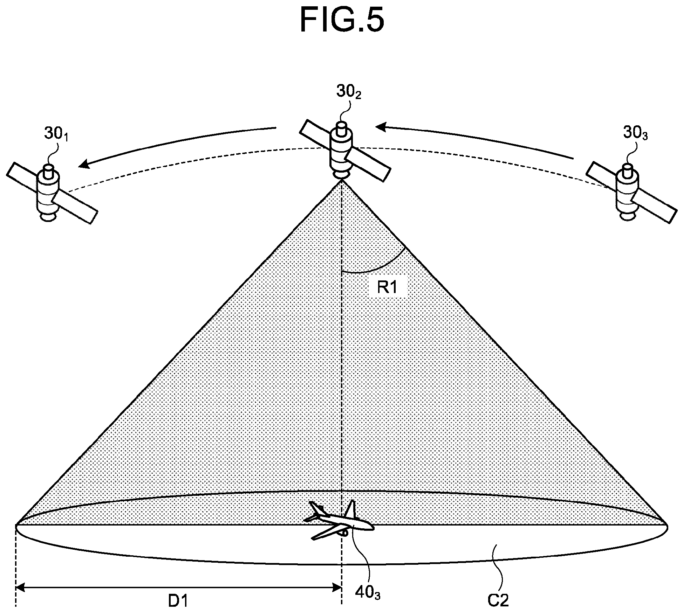

FIG. 5 is a diagram illustrating an example of a cell configured with a non-geostationary satellite. FIG. 5 illustrates a cell C2 formed by the satellite station 30₂ that is the low earth orbiting satellite station. The satellite station performing low earth orbiting communicates with the terminal device 40 on the ground with a predetermined directivity on the ground. For example, an angle R1 illustrated in FIG. 5 is 40°. In the case of FIG. 5, a radius D1 of the cell C2 formed by the satellite station 30₂ is, for example, 1000 km. The low earth orbiting satellite station moves at a constant velocity. When it becomes difficult for the low earth orbiting satellite station to provide the satellite communication to the terminal device 40 on the ground, a neighbor satellite station provides the satellite communication. In the case of the example in FIG. 5, when it is difficult for the satellite station 30₂ to provide the satellite communication to the terminal device 40 on the ground, the neighbor satellite station 30₃ provides the satellite communication. Note that values of the angle R1 and the radius D1 described above are merely examples and are not limited to the above.

As described above, the medium earth orbiting satellite and the low earth orbiting satellite move on the orbit at a very high speed in the sky, and when the low-orbit satellite is located, for example, at an altitude of 600 km, the low-orbit satellite moves on the orbit at a speed of 7.6 km/S. The low earth orbiting satellite forms a cell (or beam) having a radius of several 10 km to several 100 km on the ground, but since the cell formed on the ground also moves in accordance with movement of the satellite, handover may be required even when the terminal device does not move on the ground. For example, assuming a case where a diameter of the cell formed on the ground is 50 km and the terminal device on the ground is not moving, the handover occurs in about 6 to 7 seconds.

As described above, the terminal device 40 can perform the wireless communication using the non-terrestrial network. Furthermore, the satellite station 30 of the communication system 1 configures the non-terrestrial network. As a result, the communication system 1 can extend a service to the terminal device 40 located in an area that cannot be covered by the terrestrial network. For example, the communication system 1 can provide public safety communication and critical communication to a communication apparatus such as an IoT device or a machine type communications (MTC) device. In addition, since service reliability and recoverability are improved by using the non-terrestrial network, the communication system 1 can reduce vulnerability of the service to physical attacks or natural disasters. In addition, the communication system 1 can realize service connection to aircraft terminal devices such as airplane passengers and drones, and service connection to mobile terminal devices such as ships and trains. In addition, the communication system 1 can provide A/V content, group communication, an IoT broadcast service, a software download service, a high-efficiency multicast service such as an emergency message, a high-efficiency broadcast service, and the like. Furthermore, the communication system 1 can also realize traffic offloading between the terrestrial network and the non-terrestrial network. In order to realize these, it is desirable that the non-terrestrial network provided by the communication system 1 is subjected to operation integration with the terrestrial network provided by the communication system 1 in an upper layer. In addition, the non-terrestrial network provided by the communication system 1 desirably has the radio access system common to that of the terrestrial network provided by the communication system 1.

Note that devices in the drawings may be considered as devices in a logical sense. In other words, a part of the devices in the drawing may be realized by a virtual machine (VM), a container, a docker, or the like, and they may be implemented on physically the same hardware.

In addition, in the present embodiment, the ground station can be rephrased as the base station. The satellite station can be rephrased as the relay station. When the satellite station has a function as the base station, the satellite station can be rephrased as the base station.

Note that an LTE base station may be referred to as an evolved node B (eNodeB) or an eNB. Further, an NR base station may be referred to as a gNodeB or a gNB. In the LTE and NR, the terminal device (also referred to as a mobile station or a terminal) may be referred to as user equipment (UE). Note that the terminal device is a type of communication apparatus, and is also referred to as a mobile station or a terminal.

In the present embodiment, the concept of the communication apparatus includes not only a portable mobile device (terminal device) such as a mobile terminal but also a device installed in a structure or a mobile body. The structure or the mobile body itself may be regarded as the communication apparatus. Further, the concept of the communication apparatus includes not only the terminal device but also the base station and the relay device. The communication apparatus is one type of processor and information processor. Furthermore, the communication apparatus can be rephrased as a transmission device or a reception device.

Hereinafter, a configuration of each device configuring the communication system 1 will be specifically described. Note that the configuration of each device described below is merely an example. The configuration of each device may be different from the following configuration.

### <2.2. Configuration of management device>

Next, a configuration of the management device 10 will be described.

The management device 10 manages the wireless network. For example, the management device 10 is a device that manages communication of the ground station 20. When the core network is the EPC, the management device 10 is, for example, a device having a function as a mobility management entity (MME). Furthermore, when the core network is the 5GC, the management device 10 is, for example, a device having a function as an access and mobility management function (AMF) or a session management function (SMF). Naturally, functions of the management device 10 are not limited to the MME, the AMF, and the SMF. For example, when the core network is the 5GC, the management device 10 may be a device having a function as a network slice selection function (NSSF), an authentication server function (AUSF), or a unified data management (UDM). Furthermore, the management device 10 may be a device having a function as a home subscriber server (HSS).

Note that the management device 10 may have a function of the gateway. For example, when the core network is the EPC, the management device 10 may have a function as a serving gateway (S-GW) or a packet data network gateway (P-GW). In addition, when the core network is the 5GC, the management device 10 may have a function as a user plane function (UPF). Note that the management device 10 is not necessarily a device configuring the core network. For example, it is assumed that the core network is a wideband code division multiple access (W-CDMA) or code division multiple access 2000 (cdma2000) core network. In this case, the management device 10 may be a device that functions as a radio network controller (RNC).

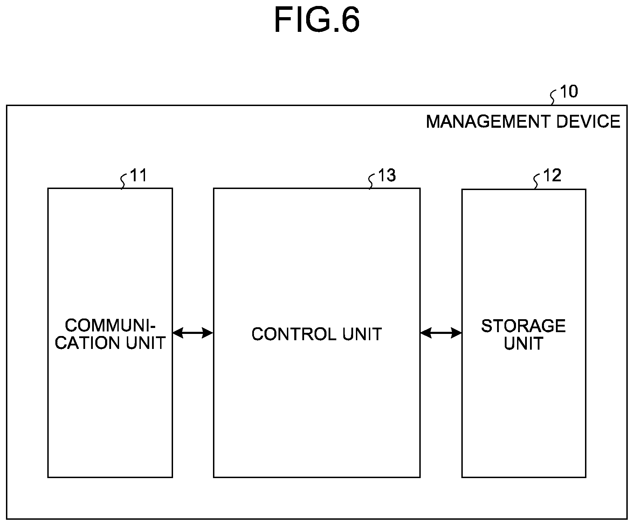

FIG. 6 is a diagram illustrating a configuration example of the management device 10 according to the embodiment of the present disclosure. The management device 10 includes a communication unit 11, a storage unit 12, and a control unit 13. Note that the configuration illustrated in FIG. 6 is a functional configuration, and a hardware configuration may be different from the functional configuration. Furthermore, functions of the management device 10 may be implemented in a distributed manner in a plurality of physically separated structures. For example, the management device 10 may include a plurality of server devices.

The communication unit 11 is a communication interface for communicating with other devices. The communication unit 11 may be a network interface or a device connection interface. For example, the communication unit 11 may be a local area network (LAN) interface such as a network interface card (NIC), or may be a universal serial bus (USB) interface including a USB host controller and a USB port. Furthermore, the communication unit 11 may be a wired interface or a wireless interface. The communication unit 11 functions as a communication means of the management device 10. The communication unit 11 communicates with the ground station 20 and the like under the control of the control unit 13.

The storage unit 12 is a data readable/writable storage device such as a dynamic random access memory (DRAM), a static random access memory (SRAM), a flash memory, or a hard disk. The storage unit 12 functions as a storage means of the management device 10. The storage unit 12 stores, for example, a connection state of the terminal device 40. For example, the storage unit 12 stores an RRC state and an ECM state of the terminal device 40. The storage unit 12 may function as a home memory that stores position information of the terminal device 40.

The control unit 13 is a controller that controls each part of the management device 10. The control unit 13 is realized by, for example, a processor such as a central processing unit (CPU) or a micro processing unit (MPU). For example, the control unit 13 is implemented by a processor executing various programs stored in the storage device inside the management device 10 using a random access memory (RAM) or the like as a work area. Note that the control unit 13 may be realized by an integrated circuit such as an application specific integrated circuit (ASIC) or a field programmable gate array (FPGA). Any of the CPU, the MPU, the ASIC, and the FPGA can be regarded as the controller.

### <2.3. Configuration of ground station>

Next, a configuration of the ground station 20 will be described.

The ground station 20 is a wireless communication apparatus that wirelessly communicates with the terminal device 40 via the satellite station 30. Note that the ground station 20 may be configured to communicate with the terminal device 40 without passing through the satellite station 30.

The ground station 20 is one type of communication apparatus. The ground station 20 is, for example, a device corresponding to a wireless base station (e.g., base station, Node B, eNB, and gNB) or a radio access point. The ground station 20 may be a wireless relay station. Further, the ground station 20 may be an optical extended device called a remote radio head (RRH). Furthermore, the ground station 20 may be a receiving station such as a field pickup unit (FPU). Furthermore, the ground station 20 may be an integrated access and backhaul (IAB) donor node or an IAB relay node that provides a radio access line and a radio backhaul line by time division multiplexing, frequency division multiplexing, or space division multiplexing.

Note that the radio access technology used by the ground station 20 may be a cellular communication technology or a wireless LAN technology. Obviously, the radio access technology used by the ground station 20 is not limited thereto, and may be other radio access technologies. For example, the radio access technology used by the ground station 20 may be an LPWA communication technology. In addition, the wireless communication used by the ground station 20 may be wireless communication using millimeter waves. Furthermore, the wireless communication used by the ground station 20 may be wireless communication using radio waves or wireless communication (optical) using infrared rays or visible light.

The ground station 20 may be capable of non-orthogonal multiple access (NOMA) communication with the terminal device 40. Here, the NOMA communication is communication using a non-orthogonal resource (transmission, reception, or both). Note that the ground station 20 may be capable of the NOMA communication with another ground station 20.

Note that the ground station 20 may be capable of communicating with each other via a base station-core network interface (e.g., S1 interface). This interface may be either wired or wireless. Furthermore, the base stations may be capable of communicating with each other via an inter-base station interface (e.g., X2 interface and S1 interface). This interface may be either wired or wireless.

Note that the concept of the base station (also referred to as the base station) includes not only a donor base station but also a relay base station (also referred to as the relay station). In addition, the concept of the base station includes not only a structure having a function of the base station but also an apparatus installed in the structure.

The structure is, for example, a building such as a high-rise building, a house, a steel tower, a station facility, an airport facility, a harbor facility, or a stadium. Note that the concept of the structure includes not only a building but also a non-building structure such as a tunnel, a bridge, a dam, a wall, or an iron pillar, and equipment such as a crane, a gate, or a windmill. In addition, the concept of the structure includes not only a structure on land (on the ground in a narrow sense) or underground, but also a structure on water such as a platform or a megafloat, and a structure under water such as a marine observation facility. The base station can be rephrased as an information processor.

The ground station 20 may be a donor station or the relay station. Furthermore, the ground station 20 may be a fixed station or a mobile station. The mobile station is a wireless communication apparatus (e.g., base station) configured to be movable. In this case, the ground station 20 may be a device installed in the mobile body or may be the mobile body itself. For example, the relay station having mobility can be regarded as the ground station 20 as the mobile station. In addition, a device that originally has the mobility, such as a vehicle, a drone, or a smartphone, and has a function of the base station (at least a part of the function of the base station) is also the ground station 20 as the mobile station.

Here, the mobile body may be a mobile terminal such as a smartphone or a mobile phone. In addition, the mobile body may be a mobile body that travels on land (ground in a narrow sense) (e.g., vehicle including an automobile, a bicycle, a bus, a truck, a motorcycle, a train, and a linear motor car) or a mobile body that travels underground (e.g., inside tunnel) (e.g., subway).

In addition, the mobile body may be a mobile body that travels on water (e.g., ship such as a passenger ship, a cargo ship, or a hovercraft) or a mobile body that moves under water (e.g., submersibles such as a submersible vessel, a submarine, and an unmanned submarine).

Note that the mobile body may be a mobile body (e.g., an aircraft such as an airplane, an airship, or a drone) that moves in the atmosphere.

Furthermore, the ground station 20 may be a ground base station (ground station) installed on the ground. For example, the ground station 20 may be a base station installed in a structure on the ground, or may be a base station installed in a mobile body moving on the ground. More specifically, the ground station 20 may be an antenna installed in a structure such as a building and a signal processing device connected to the antenna. Obviously, the ground station 20 may be a structure or a mobile body itself. The "ground" in a broad sense includes not only land (ground in a narrow sense) but also underground, on water, and under water. Note that the ground station 20 is not limited to the ground base station. For example, the ground station 20 may be the aircraft station. From a viewpoint of the satellite station 30, the aircraft station located on the earth can also be regarded as the ground station.

The aircraft station is a wireless communication apparatus capable of floating in the atmosphere, such as an aircraft. The aircraft station may be a device mounted on an aircraft or the like, or may be the aircraft itself. Note that the concept of the aircraft includes not only a heavy aircraft such as an airplane and a glider but also a light aircraft such as a balloon and an airship. In addition, the concept of the aircraft includes not only heavy and light aircrafts but also a rotorcraft such as a helicopter and an autogyroscope. Note that the aircraft station (or the aircraft on which an aircraft station is mounted) may be an unmanned aerial vehicle such as a drone.

Note that the concept of the unmanned aerial vehicle also includes an unmanned aircraft system (UAS) and a tethered UAS. The concept of the unmanned aerial vehicle also includes lighter than air (LTA) UAS and heavier than air (HTA) UAS. Furthermore, the concept of unmanned aerial vehicles also includes high altitude UAS platforms (HAPs).

A magnitude of coverage of the ground station 20 may be large such as a macro cell to small such as a pico cell. It is apparent that the magnitude of coverage of the ground station 20 may be extremely small such as a femto cell. Further, the ground station 20 may have a beamforming capability. In this case, the ground station 20 may form a cell or a service area for each beam.

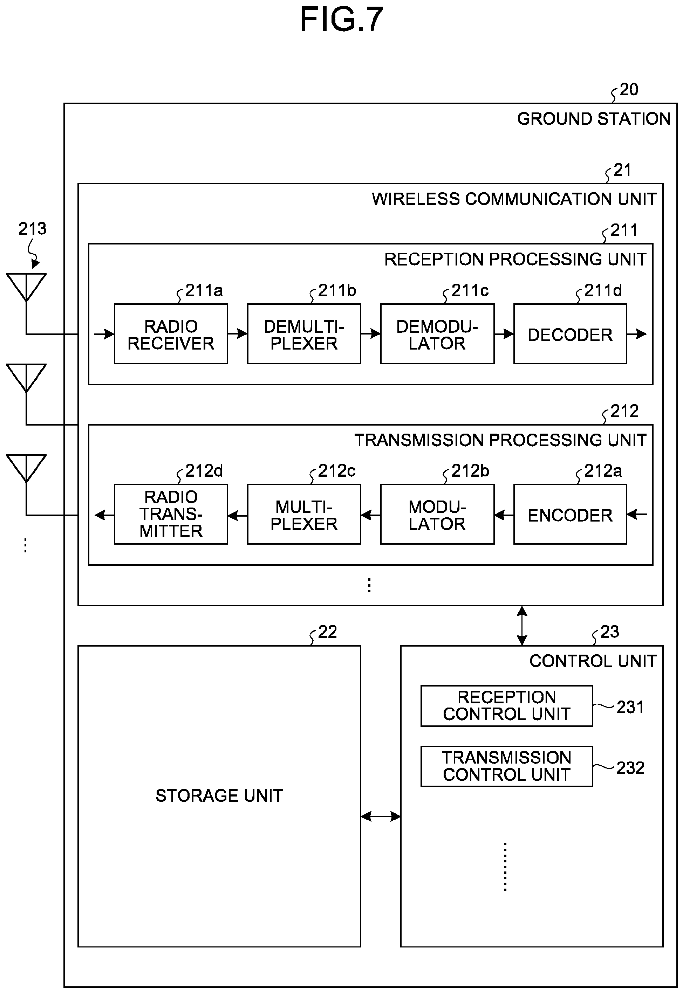

FIG. 7 is a diagram illustrating a configuration example of the ground station 20 according to the embodiment of the present disclosure. The ground station 20 includes a wireless communication unit 21, a storage unit 22, and a control unit 23. Note that the configuration illustrated in FIG. 7 is a functional configuration, and a hardware configuration may be different from the functional configuration. Furthermore, functions of the ground station 20 may be implemented in a distributed manner in a plurality of physically separated configurations.

The wireless communication unit 21 is a signal processing unit for wirelessly communicating with other wireless communication apparatus (e.g., terminal device 40). The wireless communication unit 21 operates under the control of the control unit 23. The wireless communication unit 21 corresponds to one or a plurality of radio access systems. For example, the wireless communication unit 21 supports both NR and LTE. The wireless communication unit 21 may be compatible with W-CDMA or cdma2000 in addition to the NR or LTE. Furthermore, the wireless communication unit 21 may support an automatic retransmission technology such as hybrid automatic repeat request (HARQ).

The wireless communication unit 21 includes a reception processing unit 211, a transmission processing unit 212, and an antenna 213. The wireless communication unit 21 may include a plurality of reception processing units 211, a plurality of transmission processing units 212, and a plurality of antennas 213. When the wireless communication unit 21 supports a plurality of radio access systems, each part of the wireless communication unit 21 can be configured individually for each of the radio access systems. For example, the reception processing unit 211 and the transmission processing unit 212 may be individually configured for the LTE and the NR. Furthermore, the antenna 213 may include a plurality of antenna elements (e.g., a plurality of patch antennas). In this case, the wireless communication unit 21 may be configured to be beamformable. The wireless communication unit 21 may be configured to be able to perform polarization beamforming using vertically polarized waves (V-polarized waves) and horizontally polarized waves (H-polarized waves).

The reception processing unit 211 processes an uplink signal received via the antenna 213. The reception processing unit 211 performs, with respect to the uplink signal, down-conversion, removal of an unnecessary frequency component, control of an amplification level, quadrature demodulation, conversion into a digital signal, removal of a guard interval (cyclic prefix), extraction of a frequency domain signal by fast Fourier transform, and the like. In this case, the reception processing unit 211 separates an uplink channel, such as a physical uplink shared channel (PUSCH) and a physical uplink control channel (PUCCH), and an uplink reference signal from a signal after the above processing is performed. The reception processing unit 211 demodulates a reception signal using a modulation scheme such as binary phase shift keying (BPSK) or quadrature phase shift keying (QPSK) with respect to a modulation symbol of the uplink channel. The modulation scheme used for demodulation may be 16-quadrature amplitude modulation (16QAM), 64QAM, or 256QAM. In this case, signal points on constellation do not necessarily have to be equidistant. The constellation may be a non-uniform constellation (NUC). The reception processing unit 211 decodes encoded bits of a demodulated uplink channel. Decoded uplink data and uplink control information are output to the control unit 23.

The transmission processing unit 212 performs transmission processing of downlink control information and downlink data. The transmission processing unit 212 encodes the downlink control information and the downlink data input from the control unit 23 using an encoding system such as block encoding, convolutional encoding, or turbo encoding. Then, the transmission processing unit 212 modulates coded bits by a predetermined modulation scheme such as BPSK, QPSK, 16QAM, 64QAM, or 256QAM. In this case, signal points on constellation do not necessarily have to be equidistant. The constellation may be a non-uniform constellation. The transmission processing unit 212 multiplexes a modulation symbol of each channel and a downlink reference signal, and arranges a multiplexed result in a predetermined resource element. Then, the transmission processing unit 212 performs various types of signal processing on the multiplexed signal under the control of the control unit 23. For example, the transmission processing unit 212 performs processing such as conversion into a frequency domain by fast Fourier transform, addition of cyclic prefix (guard interval), generation of a baseband digital signal, conversion into an analog signal, quadrature modulation, up-conversion, removal of an extra frequency component, and power amplification. A signal generated by the transmission processing unit 212 is transmitted from the antenna 213.

The antenna 213 is an antenna device (antenna unit) that mutually converts a current and a radio wave. The antenna 213 may include one antenna element (e.g., one patch antenna) or may include a plurality of antenna elements (e.g., a plurality of patch antennas). In a case where the antenna 213 includes a plurality of antenna elements, the wireless communication unit 21 may be configured to be beamformable. For example, the wireless communication unit 21 may be configured to generate a directional beam by controlling the directivity of a radio signal using the plurality of antenna elements. Note that the antenna 213 may be a dual-polarized antenna. When the antenna 213 is a dual-polarized antenna, the wireless communication unit 21 may use vertically polarized waves (V-polarized waves) and horizontally polarized waves (H-polarized waves) to transmit radio signals. Then, the wireless communication unit 21 may control directivity of the radio signal transmitted using the vertically polarized wave and the horizontally polarized wave.

The storage unit 22 is a storage device capable of reading and writing data, such as a DRAM, an SRAM, a flash memory, or a hard disk. The storage unit 22 functions as a storage means of the ground station 20.

The control unit 23 is a controller that controls each part of the ground station 20. The control unit 23 is realized by, for example, a processor such as a central processing unit (CPU) or a micro processing unit (MPU). For example, the control unit 23 is implemented by a processor executing various programs stored in the storage device inside the ground station 20 using the random access memory (RAM) or the like as a work area. Note that the control unit 23 may be realized by an integrated circuit such as an application specific integrated circuit (ASIC) or a field programmable gate array (FPGA). Any of the CPU, the MPU, the ASIC, and the FPGA can be regarded as the controller.

The control unit 23 includes a reception control unit 231 and a transmission control unit 232. Each block (reception control unit 231 and transmission control unit 232) configuring the control unit 23 is a functional block indicating each function of the control unit 23. These functional blocks may be software blocks or hardware blocks. For example, each of the functional blocks described above may be one software module realized by software (including microprogram), or may be one circuit block on a semiconductor chip (die). It is apparent that each functional block may be one processor or one integrated circuit. Note that the control unit 23 may be configured by a functional unit different from the above-described functional blocks. A configuration method of the functional blocks is arbitrary.

### <2.4. Configuration of satellite station>

Next, a configuration of the satellite station 30 will be described.

The satellite station 30 is a relay station that relays communication between the ground station 20 and the terminal device 40. Note that the satellite station 30 may be a base station that provides the terminal device 40 with a function of the base station.

The satellite station 30 is the wireless communication apparatus capable of floating outside the atmosphere. The satellite station 30 may be a device mounted on a space mobile body such as an artificial satellite, or may be the space mobile body itself. The space mobile body is a mobile body that moves outside the atmosphere. Examples of the space mobile body include artificial bodies such as an artificial satellite, spacecraft, space station, and probe.

A satellite serving as the satellite station 30 may be any of a low earth orbiting (LEO) satellite, a medium earth orbiting (MEO) satellite, a geostationary earth orbiting (GEO) satellite, and a highly elliptical orbiting (HEO) satellite. Obviously, the satellite station may be a device mounted on the LEO satellite, the MEO satellite, the GEO satellite, or the HEO satellite.

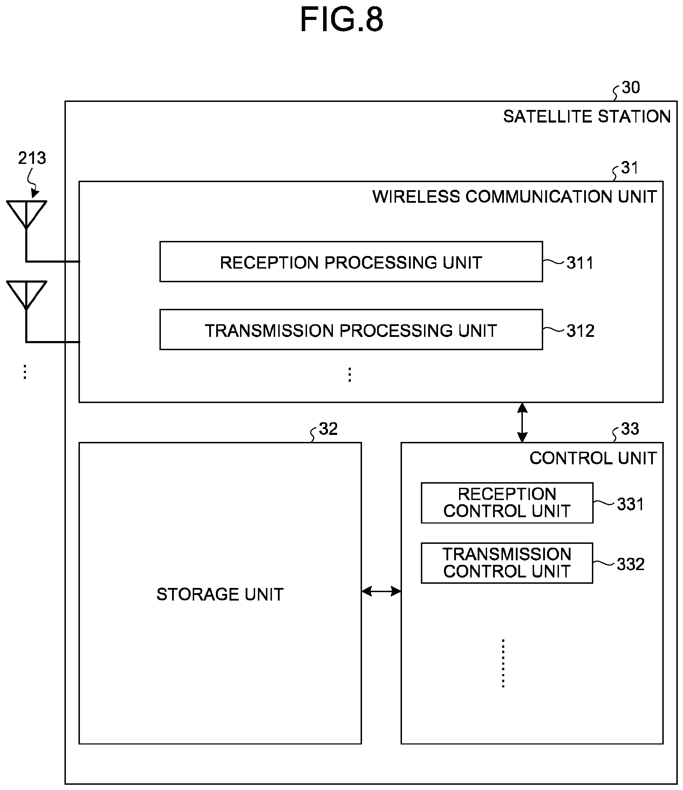

FIG. 8 is a diagram illustrating a configuration example of the satellite station 30 according to the embodiment of the present disclosure. The satellite station 30 includes a wireless communication unit 31, a storage unit 32, and a control unit 33. Note that the configuration illustrated in FIG. 8 is a functional configuration, and a hardware configuration may be different from the functional configuration. Furthermore, functions of the satellite station 30 may be implemented in a distributed manner in a plurality of physically separated configurations.

The wireless communication unit 31 is a wireless communication interface that wirelessly communicates with other wireless communication apparatuses (e.g., ground station 20, terminal device 40, satellite station 50, and another satellite station 30). The wireless communication unit 31 supports one or a plurality of radio access systems. For example, the wireless communication unit 31 supports both NR and LTE. The wireless communication unit 31 may be compatible with the W-CDMA or cdma3000 in addition to the NR or LTE. The wireless communication unit 31 includes a reception processing unit 311, a transmission processing unit 312, and an antenna 313. The wireless communication unit 31 may include a plurality of reception processing units 311, a plurality of transmission processing units 312, and a plurality of antennas 313. When the wireless communication unit 31 supports a plurality of radio access systems, each part of the wireless communication unit 31 can be configured individually for each radio access system. For example, the reception processing unit 311 and the transmission processing unit 312 may be individually configured for the LTE and the NR. Configurations of the reception processing unit 311, the transmission processing unit 312, and the antenna 313 are similar to the configurations of the reception processing unit 311, the transmission processing unit 312, and the antenna 313 described above. Note that the wireless communication unit 31 may be configured to be beamformable similarly to the wireless communication unit 21.

The storage unit 32 is a storage device capable of reading and writing data, such as the DRAM, the SRAM, the flash memory, or the hard disk. The storage unit 32 functions as a storage means of the satellite station 30.

The control unit 33 is a controller that controls each part of the satellite station 30. The control unit 33 is realized by, for example, a processor such as the CPU or the MPU. For example, the control unit 33 is realized by a processor executing various programs stored in the storage device inside the satellite station 30 using the RAM or the like as a work area. Note that the control unit 33 may be realized by an integrated circuit such as the ASIC or the FPGA. Any of the CPU, the MPU, the ASIC, and the FPGA can be regarded as the controller.

The control unit 33 includes a reception control unit 331 and a transmission control unit 332. Each block (reception control unit 331 and transmission control unit 332) configuring the control unit 33 is a functional block indicating each function of the control unit 33. These functional blocks may be software blocks or hardware blocks. For example, each of the functional blocks described above may be one software module realized by software (including microprogram), or may be one circuit block on a semiconductor chip (die). It is apparent that each functional block may be one processor or one integrated circuit. The control unit 33 may be configured by a functional unit different from the above-described functional blocks. A configuration method of the functional blocks is arbitrary.

### <2.5. Configuration of terminal device>

Next, a configuration of the terminal device 40 will be described.

The terminal device 40 is a wireless communication apparatus that wirelessly communicates with other communication apparatuses such as the ground station 20, the satellite stations 30 and 50, the base station 60, and the aircraft station 70. For example, the terminal device 40 may be a mobile phone, a smart device (smartphone or tablet), a personal digital assistant (PDA), or a personal computer. Furthermore, the terminal device 40 may be a device such as a business-use camera provided with a communication function, or may be a motorcycle, a moving relay vehicle, or the like on which a communication apparatus such as a field pickup unit (FPU) is mounted. Furthermore, the terminal device 40 may be a machine to machine (M2M) device or an Internet of things (IoT) device.

Note that the terminal device 40 may be capable of performing NOMA communication with the ground station 20. Furthermore, the terminal device 40 may be capable of using an automatic retransmission technology such as HARQ when communicating with the ground station 20. Further, the terminal device 40 may be capable of performing sidelink communication with another terminal device 40. The terminal device 40 may also be capable of using an automatic retransmission technology such as HARQ when performing the sidelink communication. Note that the terminal device 40 may also be capable of NOMA communication in communication (sidelink) with other terminal devices 40. Furthermore, the terminal device 40 may be capable of performing the LPWA communication with another communication apparatus (e.g., ground station 20 and other terminal devices 40). Furthermore, wireless communication used by the terminal device 40 may be wireless communication using millimeter waves. Note that the wireless communication (including sidelink communication) used by the terminal device 40 may be wireless communication using radio waves or wireless communication (optical) using infrared rays or visible light.

Furthermore, the terminal device 40 may be a mobile device. The mobile device is a mobile wireless communication apparatus. In this case, the terminal device 40 may be a wireless communication apparatus installed in a mobile body or may be the mobile body itself. For example, the terminal device 40 may be a vehicle that moves on a road, such as an automobile, a bus, a truck, and a motorcycle, or the wireless communication apparatus mounted on the vehicle. Note that the mobile body may be a mobile terminal, or may be the mobile body that travels on land (on the ground in a narrow sense), underground, on water, or under water. Furthermore, the mobile body may be a mobile body that travels in the atmosphere, such as a drone or a helicopter, or may be a mobile body that travels outside the atmosphere such as an artificial satellite.

The terminal device 40 may be simultaneously connected to a plurality of base stations or a plurality of cells to perform communication. For example, when one base station supports a communication area via a plurality of cells (e.g., pCell and sCell), it is possible to bundle the plurality of cells and communicate between the ground station 20 and the terminal device 40 by a carrier aggregation (CA) technology, a dual connectivity (DC) technology, or a multi-connectivity (MC) technology. Alternatively, the terminal device 40 and the plurality of ground stations 20 can communicate with each other by a coordinated multi-point transmission and reception (CoMP) technology via cells of different ground stations 20.

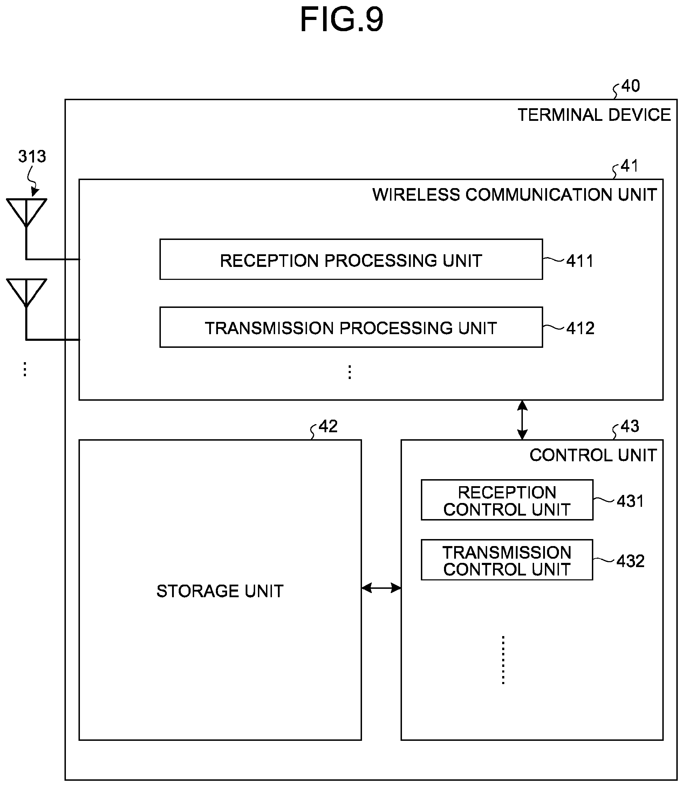

FIG. 9 is a diagram illustrating a configuration example of the terminal device 40 according to the embodiment of the present disclosure. The terminal device 40 includes a wireless communication unit 41, a storage unit 42, and a control unit 43. Note that the configuration illustrated in FIG. 9 is a functional configuration, and a hardware configuration may be different from the functional configuration. Furthermore, functions of the terminal device 40 may be implemented in a distributed manner in a plurality of physically separated configurations.

The wireless communication unit 41 is a signal processing unit for wirelessly communicating with other wireless communication apparatuses (e.g., ground station 20, and other terminal devices 40). The wireless communication unit 41 operates under the control of the control unit 43. The wireless communication unit 41 includes a reception processing unit 411, a transmission processing unit 412, and an antenna 413. Configurations of the wireless communication unit 41, the reception processing unit 411, the transmission processing unit 412, and the antenna 413 may be similar to those of the wireless communication unit 21, the transmission processing unit 212, the reception processing unit 211, and the antenna 213 of the ground station 20. Further, the wireless communication unit 41 may be configured to be beamformable similarly to the wireless communication unit 21.

The storage unit 42 is a storage device capable of reading and writing data, such as a DRAM, an SRAM, a flash memory, or a hard disk. The storage unit 42 functions as a storage means of the terminal device 40.

The control unit 43 is a controller that controls each part of the terminal device 40. The control unit 43 is realized by, for example, a processor such as the CPU or the MPU. For example, the control unit 43 is realized by a processor executing various programs stored in a storage device inside the terminal device 40 using the RAM or the like as a work area. Note that the control unit 43 may be realized by an integrated circuit such as the ASIC or the FPGA. Any of the CPU, the MPU, the ASIC, and the FPGA can be regarded as the controller.

The control unit 43 includes a reception control unit 431 and a transmission control unit 432. Each block (reception control unit 431 and transmission control unit 432) configuring the control unit 43 is a functional block indicating each function of the control unit 43. These functional blocks may be software blocks or hardware blocks. For example, each of the functional blocks described above may be one software module realized by software (including microprogram), or may be one circuit block on a semiconductor chip (die). It is apparent that each functional block may be one processor or one integrated circuit. Note that the control unit 43 may be configured by a functional unit different from the above-described functional blocks. A configuration method of the functional blocks is arbitrary.

### <<3. Operation of communication system>>

### <3.1. Frame configuration example>

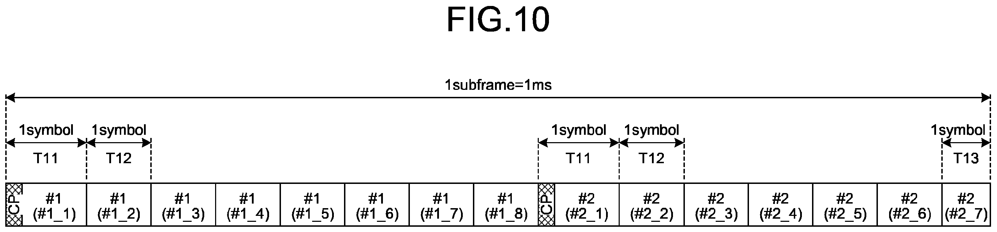

FIG. 10 is a diagram illustrating an example of a frame configuration of the transmission signal according to the embodiment of the present disclosure. FIG. 10 illustrates a frame configuration of one subframe.

In FIG. 10, one subframe is 1 ms. A plurality of symbols is included in one subframe. In the example in FIG. 10, one subframe includes 15 symbols. Each symbol includes one piece of transmission data. One subframe includes a plurality of consecutive symbols including the same transmission data. In other words, in the example in FIG. 10, a length of the transmission data (example of a first signal) and a length of a signal obtained by adding the cyclic prefix CP to the transmission data are one transmission unit (symbol).

Here, the transmission data is a signal converted from the frequency domain to the time domain by inverse fast Fourier transform (IFFT). The transmission data may also be referred to as, for example, a time-continuous signal or a time-continuous signal without cyclic prefix.

Note that, hereinafter, in order to distinguish the transmission data, different pieces of transmission data may be described with an index (#1, #2, and so on). In addition, in order to distinguish each piece of transmission data repeatedly transmitted, a different number may be added after the index. For example, to distinguish between a first transmission and a second transmission of the same transmission data #1, they are distinguished by attaching different numbers such as transmission data #1_1 and #1_2.

In the example in FIG. 10, eight symbols including the transmission data #1 are consecutively arranged, and then seven symbols including the transmission data #2 are consecutively arranged. Further, the cyclic prefix CP is added to the head of the transmission data #1_1 and #2_1 transmitted for the first time, and the cyclic prefix CP is not added to other pieces of transmission data #1_2 to #1_8 and #2_2 to #2_7.

Therefore, a symbol length T11 of symbols including the transmission data #1_1 and #2_1 transmitted for the first time is longer than symbol lengths T12 and T13 of symbols including other pieces of transmission data #1_2 to #1_8 and #2_2 to #2_7.

In addition, the symbol length T13 of the symbol including the transmission data #2_7 transmitted at the end of the subframe is shorter than the symbol lengths T11 and T12 of the symbols including other pieces of transmission data #1_1 to #1_8 and #2_1 to #2_6. This is because the cyclic prefix CP is added to the transmission data #1_1 and #2_1. As described above, since the length of the last symbol of the subframe is shorter than the data length of the transmission data, the length of the last symbol of the subframe is shorter than the lengths of all other symbols. Therefore, the length of the transmission data #2_7 included in the last symbol is shorter than the lengths of the other pieces of transmission data #1_1 to #1_8 and #2_1 to #2_6.

Here, the last symbol includes the transmission data #2_7, but the present disclosure is not limited thereto. For example, the last symbol may include a zero-padding signal instead of the transmission data #2_7.

Furthermore, in the example illustrated in FIG. 10, two pieces of transmission data #1 and #2 are included in one subframe, but the present disclosure is not limited thereto. One piece of transmission data #1 may be repeated and concatenated in one subframe. Alternatively, three or more pieces of transmission data #1, #2, #3, and so on may be included in one subframe.

Further, in FIG. 10, when the transmission data #1 is repeated eight times and concatenated (eight times of concatenation) and when the transmission data #2 is repeated and concatenated seven times (seven times of concatenation) have been described, but the present disclosure is not limited thereto. At least one piece of transmission data included in one subframe may be repeated and concatenated a plurality of times. In other words, one subframe may include one or more pieces of transmission data of which the number of times of concatenation is two or more, and the number of times of concatenation of one piece of transmission data may be six times or less or nine times or more. For example, when the transmission data #1 is repeated and concatenated twice or more, one piece of transmission data #2 may be included in the subframe.

In addition, FIG. 10 illustrates a case where the cyclic prefix CP is added to the heads of the transmission data #1_1 and #2_1 transmitted for the first time, but the present disclosure is not limited thereto. For example, the cyclic prefix CP may be added to ends of the transmission data #1_8 and #2_7 that are transmitted last.

### <3.2. Example of setting repetitive transmission>

In the frame configuration used for repetitive transmission according to the embodiment of the present disclosure, for example, the configuration as illustrated in FIG. 10 may be defined in advance according to standards or the like, or may be set by the base station.

For example, the base station may determine at least one of the following settings for repetitive transmission according to the embodiment.
- Whether or not to perform repetitive transmission
- Number of times of repetitive transmission
- Number of times of transmission data concatenation
- Insertion position and size of cyclic prefix CP

The base station determines whether or not to perform the repetitive transmission according to, for example, capability and position information of the terminal device 40. At this time, the base station may determine whether to perform the repetitive transmission according to the present embodiment or, for example, whether to perform the conventional repetitive transmission illustrated in FIG. 1A.

When the repetitive transmission is determined to be performed, the base station determines, for example, the number of times to perform repetitive transmission for one piece of transmission data (number of times of repetitive transmission). The number of times of repetitive transmission can be determined according to, for example, the position information of the terminal device 40 or availability of resource.

When the repetitive transmission according to the present embodiment is determined to be performed, the base station determines the number of times of concatenation that is the number of times of repeating one piece of transmission data for concatenation. The number of times of concatenation may be the same as or less than the number of times of repetitive transmission.

Further, when the repetitive transmission according to the present embodiment is determined to be performed, the base station determines the insertion position of the cyclic prefix CP. The base station may, for example, determine to insert the cyclic prefix CP at a timing when the transmission data is switched. In other words, the base station may determine to insert the cyclic prefix CP into one symbol in each concatenated data. Alternatively, the base station may determine to insert the cyclic prefix CP at a specific timing at which the transmission unit in time axis, such as a slot or the subframe, is changed.

For example, when the same transmission data is continuously and repeatedly transmitted over a plurality of subframes, the base station may determine to insert the cyclic prefix CP at the timing when the subframe is changed in addition to the timing when the transmission data is changed.

Further, when the repetitive transmission is determined to be performed, the base station determines the size of the cyclic prefix CP. The size of the cyclic prefix CP is determined according to a radio wave propagation path delay status of the communication system 1. The size of the cyclic prefix CP may also include zero. In other words, the cyclic prefix CP may not be inserted, or the cyclic prefix CP having the size of zero may be inserted.

Note that the above-described setting is set by the base station, but is not limited thereto. For example, all or some of the settings may be determined in advance according to standards or the like, or may be determined according to the state of the communication system 1 or other settings.

For example, when the cyclic prefix CP is predetermined to be inserted at the timing of changing the transmission data, the insertion position of the cyclic prefix CP is also determined according to the number of times of concatenation when the base station determines the number of times of transmission data concatenation. Alternatively, once the insertion position of the cyclic prefix CP is determined, the number of times of concatenation is determined accordingly.

Furthermore, for example, each of the terminal device 40 and the base station may calculate the number of times of repetitive transmission according to a propagation distance estimated according to a position of the base station and a position of the terminal device 40.

Furthermore, for example, when it is determined in advance that the number of times of repetitive transmission is same as the number of times of concatenation, the base station determines the number of times of repetitive transmission or the number of times of concatenation, so that the other is also determined.

The base station notifies, by signaling, the terminal device 40 of information regarding the determined setting. The base station notifies the terminal device 40 of setting information regarding the repetitive transmission by using, for example, system information or RRC signaling.

Instead of or in addition to the setting information described above, the base station can also notify the terminal device 40 of, for example, a timing to change the transmission data to be concatenated. Specifically, for example, the base station can notify the terminal device 40 of information regarding the timing at which the transmission data #1 is changed to the transmission data #2.

In addition, the base station may notify the terminal device 40 of information regarding subcarrier spacing. For example, the terminal device 40 may change a value of the setting information (information regarding the number of times of repetitive transmission and the number of times of concatenation, information regarding the insertion position/size of the cyclic prefix CP, etc.) regarding the above-described repetitive transmission of the present embodiment according to the information regarding subcarrier spacing.

For example, the base station notifies the setting information regarding the repetitive transmission of the present embodiment (hereinafter also simply referred to as setting information.) when the subcarrier spacing of 15 kHz is used as a basis. The terminal device 40 calculates a value of the setting information in subcarrier spacing notified according to the setting information and the information regarding subcarrier spacing notified separately from the base station. Here, the case where the subcarrier spacing of 15 kHz is used as the basis has been described as an example, but the value is not limited thereto, and other subcarrier spacing values may be used as the basis.

Note that the base station may explicitly or implicitly notify implementation information regarding whether or not to implement the repetitive transmission of the present embodiment.

When the base station explicitly notifies the implementation information, the terminal device 40 performs, for example, signal processing to which the repetitive transmission according to the present embodiment is applied in both a transmission process and a reception process. Note that details of the transmission process and the reception process performed by the base station and the terminal device 40 will be described later.

When the implementation information regarding whether or not to perform the repetitive transmission of the present embodiment is implicitly notified, the base station may notify the implementation information in association with the information regarding whether or not to perform the repetitive transmission. For example, when the repetitive transmission is performed, the repetitive transmission according to the embodiment is performed, and when the repetitive transmission is not performed, the repetitive transmission according to the embodiment is not performed.

Alternatively, the base station may notify the implementation information in association with the number of times of repetitive transmission. For example, when the repetitive transmission is performed a predetermined number of times of repetition or more, the repetitive transmission of the present embodiment is performed. On the other hand, when transmission is performed less than the predetermined number of times of repetition, the repetitive transmission of the present embodiment is not performed, and general repetitive transmission, for example, as illustrated in FIG. 1A is performed. Note that the number of times of repetitive transmission may be explicitly notified to the terminal device 40 by the base station, or may be determined based on information regarding a distance between the base station and the terminal device 40.

In addition, the base station may notify the implementation information in association with information regarding a guard interval such as the cyclic prefix CP. For example, when the base station notifies the position information regarding the insertion position of the guard interval, such as the cyclic prefix CP, the repetitive transmission according to the embodiment is performed. On the other hand, when the position information is not notified, the repetitive transmission of the present embodiment is not performed.

### <3.3. Transmission process>

Next, the transmission process of repetitive transmission according to the present embodiment will be described. The transmission process is performed by the transmission processing unit 212 under the control of the control unit 23 (transmission control unit 232) of the ground station 20 described above. Alternatively, the transmission process is performed by the transmission processing unit 312 under the control of the control unit 33 (transmission control unit 332) of the satellite station 30. Furthermore, the transmission process is performed by the transmission processing unit 412 under the control of the control unit 43 (transmission control unit 432) of the terminal device 40. In the following description, in order to simplify the description, it is assumed that a control unit of a transmission device performs the transmission process.

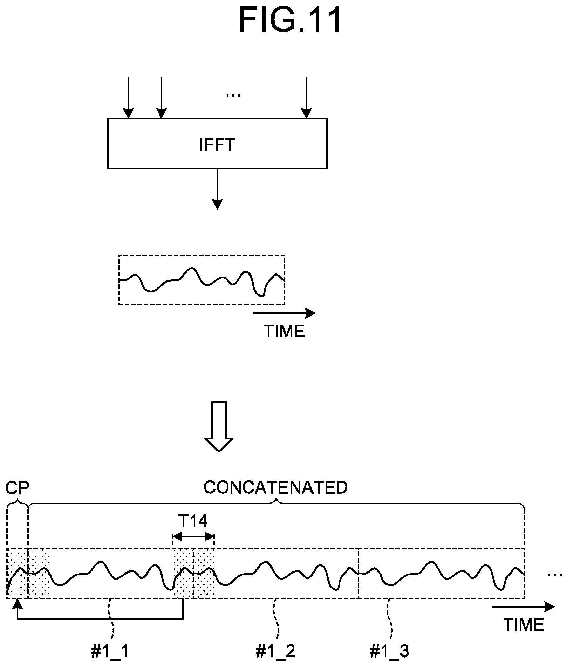

FIG. 11 is a diagram illustrating an example of the transmission process according to the embodiment of the present disclosure. As illustrated in FIG. 11, the control unit of the transmission device performs a fast Fourier transform (IFFT) process on the transmission data in the frequency domain to generate the transmission data #1 in the time domain.

The control unit of the transmission device duplicates the transmission data #1 according to the number of times of concatenation to generate and concatenate the transmission data #1_1 to #1_3. The control unit of the transmission device adds the cyclic prefix CP to the head of the concatenated transmission data to generate a transmission signal. The control unit of the transmission device transmits the transmission signal generated to a reception device that is a communication partner.

In this manner, the control unit of the transmission device concatenates a plurality of signals (transmission data) obtained by IFFT, and inserts the cyclic prefix CP at the head of the concatenated transmission data.

On the other hand, the cyclic prefix CP is not inserted between the concatenated pieces of transmission data. This is because, as illustrated in FIG. 11, since a time-axis signal waveform of the concatenated transmission data is a continuous signal waveform (see period T14 in FIG. 11), the same effect as that in the case of insertion of the cyclic prefix CP can be obtained although the cyclic prefix CP is not inserted.

As described above, the control unit of the transmission device repeats concatenation of the transmission data obtained by the IFFT according to the number of times of concatenation, and inserts the cyclic prefix CP at the head of concatenated signals. As a result, an effect similar to that in a case where the cyclic prefix CP is inserted into all pieces of transmission data to be repeatedly transmitted can be obtained, and the frequency utilization efficiency can be improved.

### <3.4. Reception process>

Next, the reception process of the signal transmitted by repetitive transmission according to the present embodiment will be described. The reception process is performed by the reception processing unit 211 under the control of the control unit 23 (reception control unit 231) of the ground station 20 described above. Alternatively, the reception process is performed by the reception processing unit 311 under the control of the control unit 33 (reception control unit 331) of the satellite station 30. Furthermore, the reception process is performed by the reception processing unit 411 under the control of the control unit 43 (reception control unit 431) of the terminal device 40. In the following description, in order to simplify the description, it is assumed that a control unit of a reception device performs the reception process.

First, the control unit of the reception device removes a guard interval segment such as the cyclic prefix CP from a reception signal. After the guard interval is removed, the control unit of the reception device cuts out the reception signal by FFT size from the head of a time sample after the removal, and decodes the reception signal into a signal in the frequency domain.

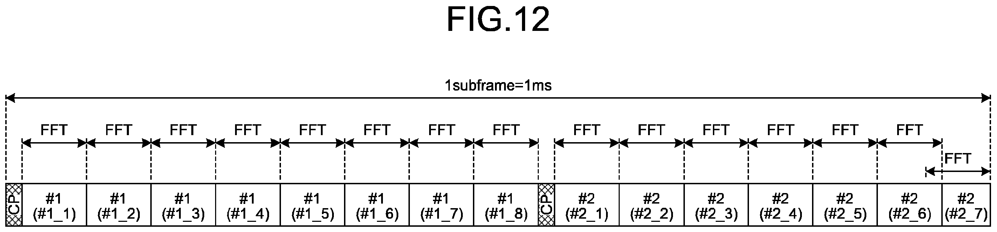

Here, FIG. 12 is a diagram illustrating the FFT segment of the reception process according to the embodiment of the present disclosure. As illustrated in FIG. 12, the control unit of the reception device performs decoding of the reception signal in the "FFT" segment by cutting out the reception signal excluding the cyclic prefix CP by FFT size.

As described above, in the frame configuration of the repetitive transmission, the length of the data (hereinafter also referred to as received data) included in the last symbol may be shorter than the length of the received data included in other symbols. In the example illustrated in FIG. 12, the size of received data #2_7 included in the last symbol of one subframe is smaller than the FFT size.

Therefore, when decoding the received data #2_7 smaller than the FFT size, the control unit of the reception device performs decoding after shifting the start position of the FFT segment forward. As a result, a part of received data #2_6 and received data #2_7 are included in the FFT segment corresponding to the last received data #2_7.

As described above, the received data #2_1 to #2_7 are data in which the same received data #2 is repeated and concatenated, and have a continuous signal waveform. Therefore, even when the start position of the FFT corresponding to the received data #2_7 is shifted forward, the same decoding result as the decoding results of other received data #2_1 to #2_6 can be obtained.

By performing the FFT process in this manner, the control unit of the reception device acquires the number of pieces of received data corresponding to the number of times of concatenation in the time domain. The control unit of the reception device calculates a log-likelihood ratio (LLR) for each of a plurality of pieces of received data subjected to FFT after the FFT process, and adds up the plurality of calculated LLRs to reduce an error rate characteristics. Note that the reception process after the FFT process can be realized by processing similar to the reception process at the time of performing, for example, normal repetitive transmission illustrated in FIG. 1A.

As described above, the transmission device transmits the transmission signal generated by concatenating repeated one piece of data, so that the reception device can receive the reception signal having the continuous signal waveform even when the cyclic prefix CP is only added to the head of the data. As a result, the reception device can perform the FFT process at the time of decoding in an arbitrary FFT segment.

### <3.5. Sequence example>

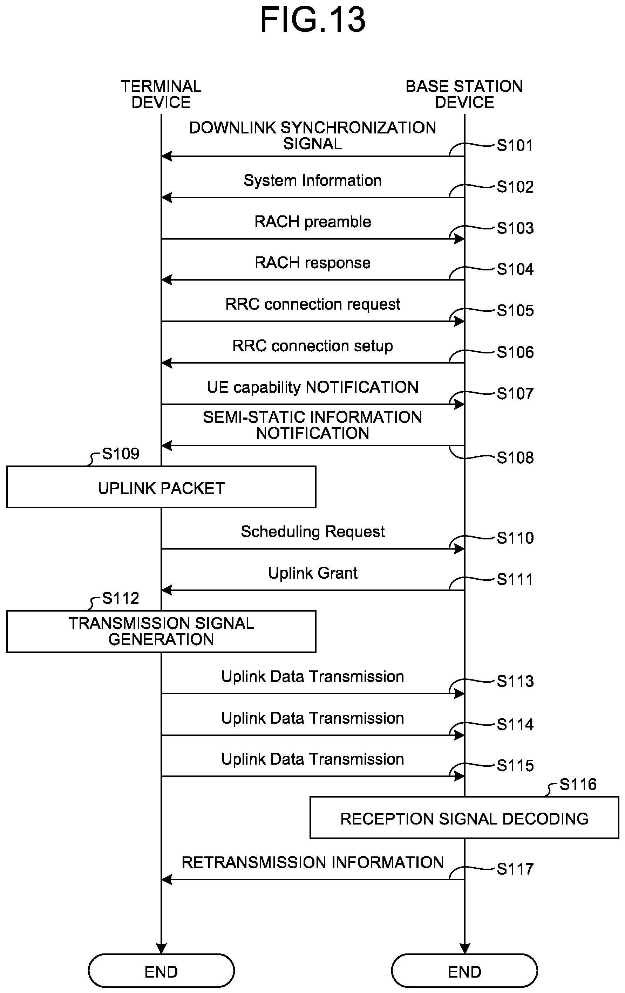

FIG. 13 is a sequence diagram illustrating an operation of the repetitive transmission of the communication system 1 according to the embodiment of the present disclosure. Hereinafter, the operation of the communication system 1 in the case of performing the repetitive transmission in the uplink will be described with reference to FIG. 13. Note that, here, a case where the communication system 1 performs the repetitive transmission in the uplink will be described, but the communication system 1 can similarly perform the repetitive transmission also in the downlink. Furthermore, although FIG. 13 illustrates communication between the base station and the terminal device 40, repetition can be similarly performed in communication between the base station and the relay station and/or communication between the relay station and the terminal device 40.

First, the terminal device 40 receives a synchronization signal from the base station (Step S101), and receives system information (Step S102). At this time, the base station may notify the terminal device 40 of semi-static information for performing the repetitive transmission of the present embodiment as the system information.

Next, the terminal device 40 performs a random access procedure with the base station by using 2-STEP random access, 4-STEP random access, or the like. In the example in FIG. 13, the terminal device 40 performs the random access procedure by transmitting a random access preamble to the base station (Step S103) and receiving a random access response from the base station (Step S104).

The terminal device 40 transmits an RRC connection request to the base station (Step S105). When receiving the RRC connection request, the base station transmits RRC connection setup information to the terminal device 40 (Step S106). Thereafter, the terminal device 40 transmits its own capability information to the base station (Step S107).

The base station notifies the terminal device 40 of semi-static information by RRC signaling (Step S108). The semi-static information includes semi-static configuration information for implementing the repetitive transmission according to the embodiment, such as the number of times of data concatenation.

Here, when an uplink packet is generated on a side of the terminal device 40 (Step S109), the terminal device 40 requests the base station to perform uplink scheduling as necessary (Step S110). When receiving a scheduling request, the base station transmits uplink grant information to the terminal device 40 (Step S111). Note that the uplink grant information may include dynamic setting information for implementing the repetitive transmission according to the present embodiment.

The terminal device 40 executes the transmission process based on the repetitive transmission according to the present embodiment and generates the transmission signal (Step S112). The terminal device 40 transmits the transmission signal (Steps S113 to S115) and executes the repetitive transmission.

The base station performs the reception process based on the repetitive transmission according to the present embodiment, and decodes the reception signal (Step S116). The base station notifies the terminal device 40 of the information regarding the reception result as information regarding retransmission (Step S117). The information regarding retransmission includes, for example, information regarding ACK/NACK.

### <<4. Modifications>>

### <4.1. First modification>

In the frame configuration according to the above-described embodiment, one symbol includes one piece of transmission data, but the present disclosure is not limited thereto. For example, a signal obtained by concatenating repeated transmission data may be one symbol. In other words, a plurality of pieces of the same transmission data may be included in one symbol.

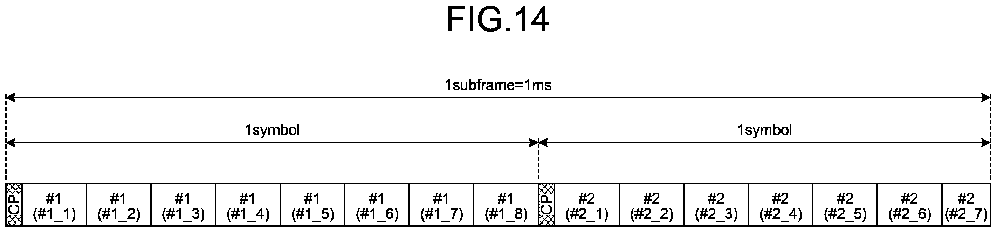

FIG. 14 is a diagram illustrating an example of a frame configuration according to a first modification of the embodiment of the present disclosure. In the frame configuration illustrated in FIG. 14, a plurality of pieces of transmission data #1_1 to #1_8 is included in one symbol, and the cyclic prefix CP is inserted at the head of the symbol. Further, a plurality of pieces of transmission data #2_1 to #2_7 is included in one symbol, and the cyclic prefix CP is inserted at the head of the symbol. In other words, in the example in FIG. 14, a length of the signal (example of the second signal) obtained by concatenating repeated transmission data is one transmission unit (symbol).

Note that the frame configuration illustrated in FIG. 14 is the same as the frame configuration illustrated in FIG. 10 except that a definition of the symbol is different. Therefore, the communication system 1 can perform the repetitive transmission similarly to the above-described embodiment.

### <4.2. Second modification>

In the above-described embodiment, in order to add the cyclic prefix CP to the head of the concatenated transmission data, symbols having different lengths are included in one subframe, but the lengths of the symbols included in one subframe may be the same.

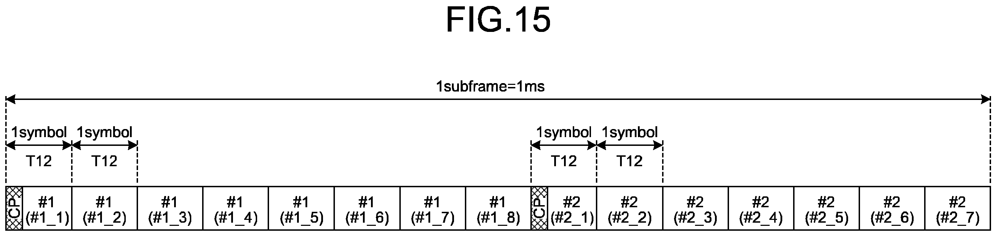

FIG. 15 is a diagram illustrating an example of a frame configuration according to a second modification of the embodiment of the present disclosure. In the frame configuration illustrated in FIG. 15, the number of data samples included in the symbol having the cyclic prefix CP is smaller than the number of data samples so that the lengths of the symbols included in the subframes become equal. In other words, in the example in FIG. 15, the length of the transmission data (example of the first signal) and the length of the transmission data including the cyclic prefix CP are one transmission unit (symbol).

In this way, by adjusting the number of data samples included in a symbol, the lengths of a plurality of symbols included in one subframe can be unified to the data length T12.

As a method of adjusting the number of data samples included in one symbol, for example, the plurality of samples at the head or tail of the symbol may be replaced with the cyclic prefix CP. In other words, it is assumed that the communication system 1 performs processing assuming that the plurality of samples at the head or tail of the symbol including the cyclic prefix CP is the cyclic prefix CP.

More specifically, for example, it is assumed that the FFT/IFFT size is "2048". In this case, in the frame configuration illustrated in FIG. 10, the control unit of the transmission device adds, as the cyclic prefix CP, the last 160 samples or 144 samples among 2048 data samples obtained by IFFT of the data in the frequency domain to the head of the data.

On the other hand, in the frame configuration illustrated in FIG. 15, the control unit of the transmission device assumes that the first 160 samples or 144 samples among the 2048 data samples obtained by IFFT of the data in the frequency domain are the cyclic prefix CP.

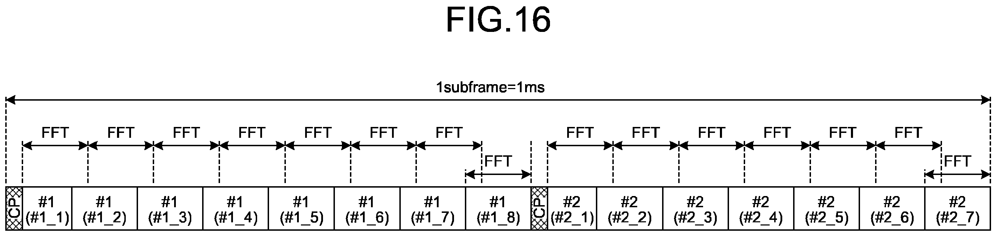

The FFT segment when the signal having the frame configuration illustrated in FIG. 15 is received will be described with reference to FIG. 16. FIG. 16 is a diagram illustrating the FFT segment according to the second modification of the embodiment of the present disclosure.

As described above, after removing the cyclic prefix CP from the reception signal, the control unit of the reception device cuts out the reception signal by FFT size from the head of the time sample to decode the reception signal. At this time, the number of samples of the symbol from which the cyclic prefix CP is removed is smaller than the number of samples of other symbols. Therefore, as illustrated in FIG. 16, data of a plurality of symbols is included in one FFT segment. As described above, since the concatenated data has a continuous signal waveform, the control unit of the reception device can perform a decoding process in the FFT segment over the plurality of symbols.

Note that, for example, the time sample immediately before changing from the data #1 to the data #2 is less than the FFT size. Therefore, the control unit of the reception device adjusts the FFT segment by shifting the start position of the FFT segment forward. In addition, since the last time sample of the subframe is smaller than the FFT size, the control unit of the reception device adjusts the FFT segment by shifting the start position of the FFT segment forward. As described above, even when sizes of the symbols included in one subframe are the same, the reception signal can be decoded by adjusting the FFT segment.

Note that the communication system 1 may perform the repetitive transmission by switching between the frame configuration illustrated in FIG. 10 and the frame configuration illustrated in FIG. 15. In this case, for example, the base station notifies the terminal device 40 or the relay station of the information regarding the frame configuration used for the repetitive transmission as the setting information.

### <4.3. Third modification>

In the embodiment and the first and second modifications described above, a case where the repetitive transmission is performed by one frequency resource has been described, but the present disclosure is not limited thereto. For example, the communication system 1 may perform the repetitive transmission using a plurality of frequency resources. In other words, frequency hopping may be applied to the repetitive transmission of the present embodiment.

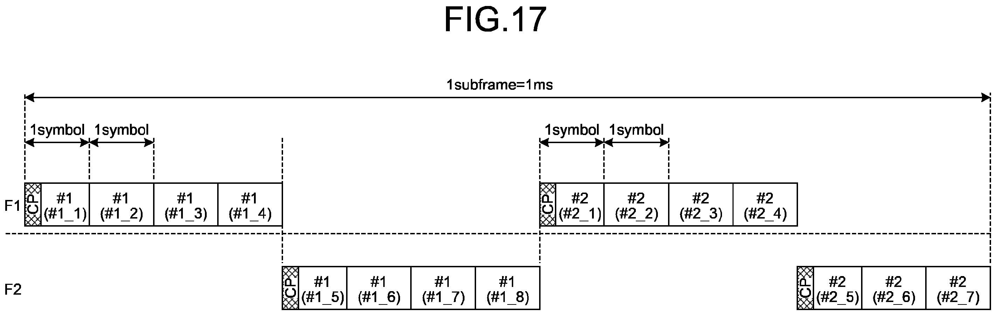

FIG. 17 is a diagram illustrating the frequency hopping according to a third modification of the embodiment of the present disclosure. Although FIG. 17 illustrates a case where the frequency hopping is applied to the frame configuration illustrated in FIG. 15, the frequency hopping according to the present modification can also be applied to the frame configurations illustrated in FIGS. 10 and 14.

FIG. 17 illustrates a case where the communication system 1 performs the frequency hopping in a first frequency band F1 and a second frequency band F2. In the example illustrated in FIG. 17, the control unit of the transmission device repeatedly transmits the data #1 four times in the first frequency band F1, and repeatedly transmits the data #1 four times in the second frequency band F2. Thereafter, the control unit of the transmission device repeatedly transmits the data #2 four times in the first frequency band F1, and repeatedly transmits the data #2 four times in the second frequency band F2. The control unit of the transmission device repeatedly transmits the data #1 eight times and the data #2 eight times while hopping between the first and second frequency bands F1 and F2 in one subframe.

At this time, the control unit of the transmission device generates the transmission signal by including the cyclic prefix CP in the first symbol after the frequency hopping (data #1_1, #1_5, #2_1, and #2_5 in FIG. 17).

As described above, when the frequency hopping is performed, first, the control unit of the transmission device divides a signal obtained by concatenating repeated data (data #1_1 to #1_8) into a plurality of signal blocks (e.g., block of data #1_1 to #1_4 and block of data #1_5 to #1_8). The control unit of the transmission device transmits each signal block using different frequency bands. In this case, the cyclic prefix CP is the head (or tail) of the signal block.

The communication system 1 according to the present modification can obtain effects similar to those of the above-described embodiment and modifications. Furthermore, the communication system 1 according to the present modification can further improve the frequency utilization efficiency by performing the frequency hopping while suppressing interference with other users by adding the cyclic prefix CP to the head (or tail) of the signal block.

### <<5. Other embodiments>>

The above-described embodiment and modifications are examples, and various modifications and applications are possible.

For example, in the above-described embodiment and modifications, the repetitive transmission of the present embodiment in which the plurality of pieces of data is repeated and concatenated using one subframe as a separator has been described. However, the present disclosure is not limited thereto. For example, instead of one subframe, one slot, a non-slot, or a radio frame may be used as the separator to perform the repetitive transmission of the present embodiment. As described above, the transmission unit in the time axis in which the repetitive transmission of the present embodiment is performed is not limited to the subframe. The repetitive transmission according to the present embodiment can be performed in an arbitrary transmission unit such as the slot or the frame.

For example, in the embodiment and the modifications described above, the cyclic prefix CP and the data are included in one symbol, but the present disclosure is not limited thereto. For example, data not including the cyclic prefix CP may be used as one symbol.

For example, the control device that controls the transmission device and the reception device of the present embodiment may be realized by a dedicated computer system or a general-purpose computer system.

For example, a communication program for executing the above-described operation is stored and distributed in a computer-readable recording medium such as an optical disk, a semiconductor memory, a magnetic tape, or a flexible disk. Then, for example, the program is installed on a computer, and the above-described processes are executed to configure the control device. Here, the control device may be a device (e.g., personal computer) outside the transmission device or the reception device. Furthermore, the control device may be a device (e.g., control unit) inside the transmission device or the reception device.

In addition, the above communication program may be stored in a disk device included in a server device on a network such as the Internet so that the communication program can be downloaded to the computer. In addition, the above-described functions may be realized by cooperation of an operating system (OS) and application software. In this case, a portion other than the OS may be stored in a medium and distributed, or a portion other than the OS may be stored in a server device and downloaded to the computer.

Among the processes described in the above embodiments, all or part of the processes described as being performed automatically can be performed manually, or all or part of the processes described as being performed manually can be performed automatically by a known method. In addition, the processing procedure, specific name, and information including various data and parameters illustrated in the above document and the drawings can be arbitrarily changed unless otherwise specified. For example, various types of information illustrated in each drawing are not limited to the illustrated information.

In addition, each component of each device illustrated in the drawings is functionally conceptual, and is not necessarily physically configured as illustrated in the drawings. In other words, a specific form of distribution and integration of each device is not limited to the illustrated form, and all or a part thereof can be functionally or physically distributed and integrated in an arbitrary unit according to various loads, usage conditions, and the like. Note that this configuration by distribution and integration may be performed dynamically.

In addition, the above-described embodiments can be appropriately combined in a region in which the processing content do not contradict each other. Furthermore, the order of each step illustrated in the sequence diagram of the above-described embodiment can be appropriately changed.

Furthermore, for example, the present embodiment can be implemented as any configuration constituting an apparatus or a system, for example, a processor as a system large scale integration (LSI) or the like, a module using a plurality of processors or the like, a unit using a plurality of modules or the like, a set obtained by further adding other functions to a unit, or the like **(i.e.,** configuration of a part of device).

Note that, in the present embodiment, the system means a set of a plurality of components (devices, modules (parts), etc.), and it does not matter whether or not all the components are in the same housing. Therefore, a plurality of devices housed in separate housings and connected via a network and one device in which a plurality of modules is housed in one housing are both systems.

Furthermore, for example, the present embodiments can adopt a configuration of cloud computing in which one function is shared and processed by a plurality of devices in cooperation via a network.

### <<6. Conclusion>>

Although the embodiments of the present disclosure have been described above, the technical scope of the present disclosure is not limited to the above-described embodiments as it is, and various modifications can be made without departing from the gist of the present disclosure. In addition, the components of different embodiments and modifications may be appropriately combined.

Note that the effects of each embodiment described in the present specification are merely examples and not limited thereto, and other effects may be provided.

### Reference Signs List

1 COMMUNICATION SYSTEM
10 MANAGEMENT DEVICE
20 GROUND STATION
30, 50 SATELLITE STATION
40 TERMINAL DEVICE
60 BASE STATION
70 AIRCRAFT STATION
11 COMMUNICATION UNIT
21, 31, 41 WIRELESS COMMUNICATION UNIT
12, 22, 32, 42 STORAGE UNIT
13, 23, 33, 43 CONTROL UNIT

## Claims

1. A communication apparatus (40) comprising a control unit (43) configured to:
- generate a second signal by concatenating a second number of repetitions of a first signal and arranging a cyclic prefix at a head or a tail of the second signal but not between the first signals, wherein the first signal represents a symbol,
- generate a transmission signal including the second signal and
- transmit the transmission signal to a communication partner (20, 30, 50, 60 70).

2. The communication apparatus according to claim 1, wherein
the communication apparatus (40) is configured to repeatedly transmit a third signal a first number of times, and
the control unit (43) is configured to generate the transmission signal including a fourth signal and the second signal and transmit the transmission signal to the communication partner, the fourth signal being obtained by concatenating the third signal repeated a third number of times and having a cyclic prefix at a head or a tail of the fourth signal.

3. The communication apparatus according to claim 1 or 2, wherein a signal length of the first signal or/and a signal length of the first signal including the cyclic prefix are set as a transmission unit in a time axis.

4. The communication apparatus according to claim 1 or 2, wherein a signal length of the second signal is set as a transmission unit in a time axis.

5. The communication apparatus according to claim 3, wherein the transmission signal includes a signal with the transmission unit having a different length.

6. The communication apparatus according to any preceding claim, wherein a length of the first signal arranged at the tail of the second signal is equal to or less than a length of another of the first signals.

7. The communication apparatus according to any one of claims 1 to 5, wherein, as the cyclic prefix, the control unit (43) is configured to add a head or a tail of the first signal to the second signal.

8. The communication apparatus according to claim 3 or 4, wherein the transmission signal includes a signal with the transmission unit having a same length.

9. The communication apparatus according to any preceding claim, wherein the cyclic prefix is a head of the first signal arranged at the head of the second signal or a tail of the first signal arranged at the tail of the second signal.

10. The communication apparatus according to any preceding claim, wherein when the control unit (43) divides the second signal into a plurality of signal blocks, and transmits the plurality of signal blocks using different frequency bands, the cyclic prefix is a head or a tail of each of the plurality of signal blocks.

11. A communication method comprising:
- generating a second signal by concatenating a second number of repetitions of a first signal and arranging a cyclic prefix at a head or a tail of the second signal but not between the first signals, wherein the first signal represents a symbol,
- generating a transmission signal including the second signal, and
- transmitting the transmission signal to a communication partner (20, 30, 50, 60 70).

## Patentansprüche

1. Kommunikationseinrichtung (40), umfassend eine Steuereinheit (43), die konfiguriert ist zum:
- Erzeugen eines zweiten Signals durch Verketten einer zweiten Anzahl von Wiederholungen eines ersten Signals und Anordnen eines zyklischen Präfixes an einem Anfang oder einem Ende des zweiten Signals, aber nicht zwischen den ersten Signalen, wobei das erste Signal ein Symbol darstellt,
- Erzeugen eines Sendesignals, einschließlich des zweiten Signals, und
- Senden des Sendesignals an einen Kommunikationspartner (20, 30, 50, 60 70).

2. Kommunikationseinrichtung nach Anspruch 1, wobei
die Kommunikationseinrichtung (40) konfiguriert ist, um ein drittes Signal eine erste Anzahl von Malen wiederholt zu senden, und
die Steuereinheit (43) konfiguriert ist, um das Sendesignal, einschließlich eines vierten Signals und des zweiten Signals, zu erzeugen und das Sendesignal an den Kommunikationspartner zu senden, wobei das vierte Signal durch Verketten des dritten Signals, das eine dritte Anzahl von Malen wiederholt wird, erhalten wird und ein zyklisches Präfix an einem Anfang oder einem Ende des vierten Signals aufweist.

3. Kommunikationseinrichtung nach Anspruch 1 oder 2, wobei eine Signallänge des ersten Signals oder/und eine Signallänge des ersten Signals, einschließlich des zyklischen Präfixes, als eine Sendeeinheit in einer Zeitachse festgelegt sind.

4. Kommunikationseinrichtung nach Anspruch 1 oder 2, wobei eine Signallänge des zweiten Signals als eine Sendeeinheit in einer Zeitachse festgelegt ist.

5. Kommunikationseinrichtung nach Anspruch 3, wobei das Sendesignal ein Signal einschließt, wobei die Sendeeinheit eine unterschiedliche Länge aufweist.

6. Kommunikationseinrichtung nach einem der vorstehenden Ansprüche, wobei eine Länge des ersten Signals, das an dem Ende des zweiten Signals angeordnet ist, gleich oder kleiner als eine Länge eines anderen der ersten Signale ist.

7. Kommunikationseinrichtung nach einem der Ansprüche 1 bis 5, wobei die Steuereinheit (43) konfiguriert ist, um einen Anfang oder ein Ende des ersten Signals als das zyklische Präfix dem zweiten Signal hinzuzufügen.

8. Kommunikationseinrichtung nach Anspruch 3 oder 4, wobei das Sendesignal ein Signal einschließt, wobei die Sendeeinheit eine gleiche Länge aufweist.

9. Kommunikationseinrichtung nach einem der vorstehenden Ansprüche, wobei das zyklische Präfix ein Anfang des ersten Signals, der an dem Anfang des zweiten Signals angeordnet ist, oder ein Ende des ersten Signals ist, das an dem Ende des zweiten Signals angeordnet ist.

10. Kommunikationseinrichtung nach einem der vorstehenden Ansprüche, wobei, wenn die Steuereinheit (43) das zweite Signal in eine Vielzahl von Signalblöcken unterteilt und die Vielzahl von Signalblöcken unter Verwendung unterschiedlicher Frequenzbänder sendet, das zyklische Präfix ein Anfang oder ein Ende jedes der Vielzahl von Signalblöcken ist.

11. Kommunikationsverfahren, umfassend:
- Erzeugen eines zweiten Signals durch Verketten einer zweiten Anzahl von Wiederholungen eines ersten Signals und Anordnen eines zyklischen Präfixes an einem Anfang oder einem Ende des zweiten Signals, aber nicht zwischen den ersten Signalen, wobei das erste Signal ein Symbol darstellt,
- Erzeugen eines Sendesignals, einschließlich des zweiten Signals, und
- Senden des Sendesignals an einen Kommunikationspartner (20, 30, 50, 60 70).

## Revendications

1. Appareil de communication (40) comprenant une unité de commande (43) configuré pour :
- générer un deuxième signal en concaténant un second nombre de répétitions d'un premier signal et en agençant un préfixe cyclique au niveau d'une tête ou d'une queue du deuxième signal mais pas entre les premiers signaux, dans lequel le premier signal représente un symbole,
- générer un signal de transmission comportant le deuxième signal, et
- transmettre le signal de transmission à un partenaire de communication (20, 30, 50, 60 70).

2. Appareil de communication selon la revendication 1, dans lequel
l'appareil de communication (40) est configuré pour transmettre de manière répétée un troisième signal un premier nombre de fois, et
l'unité de commande (43) est configurée pour générer le signal de transmission comportant un quatrième signal et le deuxième signal et transmettre le signal de transmission au partenaire de communication, le quatrième signal étant obtenu par concaténation du troisième signal répété un troisième nombre de fois et ayant un préfixe cyclique au niveau d'une tête ou d'une queue du quatrième signal.

3. Appareil de communication selon la revendication 1 ou 2, dans lequel une longueur de signal du premier signal ou/et une longueur de signal du premier signal comportant le préfixe cyclique sont définies en tant qu'unité de transmission dans un axe temporel.

4. Appareil de communication selon la revendication 1 ou 2, dans lequel une longueur de signal du deuxième signal est définie en tant qu'unité de transmission dans un axe temporel.

5. Appareil de communication selon la revendication 3, dans lequel le signal de transmission comporte un signal avec l'unité de transmission ayant une longueur différente.

6. Appareil de communication selon l'une quelconque revendication précédente, dans lequel une longueur du premier signal agencé au niveau de la queue du deuxième signal est égale ou inférieure à une longueur d'un autre des premiers signaux.

7. Appareil de communication selon l'une quelconque des revendications 1 à 5, dans lequel, en tant que préfixe cyclique, l'unité de commande (43) est configurée pour ajouter une tête ou une queue du premier signal au deuxième signal.

8. Appareil de communication selon la revendication 3 ou 4, dans lequel le signal de transmission comporte un signal avec l'unité de transmission ayant une même longueur.

9. Appareil de communication selon l'une quelconque revendication précédente, dans lequel le préfixe cyclique est une tête du premier signal agencé au niveau de la tête du deuxième signal ou une queue du premier signal agencé au niveau de la queue du deuxième signal.

10. Appareil de communication selon l'une quelconque revendication précédente, dans lequel, lorsque l'unité de commande (43) divise le deuxième signal en une pluralité de blocs de signaux, et transmet la pluralité de blocs de signaux à l'aide de bandes de fréquences différentes, le préfixe cyclique est une tête ou une queue de chacun de la pluralité de blocs de signaux.

11. Procédé de communication comprenant :
- la génération d'un deuxième signal en concaténant un second nombre de répétitions d'un premier signal et en agençant un préfixe cyclique au niveau d'une tête ou d'une queue du deuxième signal mais pas entre les premiers signaux, dans lequel le premier signal représente un symbole,
- la génération d'un signal de transmission comportant le deuxième signal, et
- la transmission du signal de transmission à un partenaire de communication (20, 30, 50, 60 70).
